# EUROPEAN PATENT SPECIFICATION

(11) **EP 4 195 107 B1**
(45) Date of publication and mention of the grant of the patent: **18.11.2026**
(21) Application number: 21383127.4
(22) Date of filing: 10.12.2021
(51) Int. Cl.: G06N 20/20, G06N 3/08, G06N 20/10, G06N 5/00, H04L 67/00

(54) **METHOD FOR TRAINING AN ALGORITHM AND METHOD FOR PROVIDING A SERVICE BASED ON THE TRAINED ALGORITHM**
VERFAHREN ZUM TRAINIEREN EINES ALGORITHMUS UND VERFAHREN ZUR BEREITSTELLUNG EINES DIENSTES BASIEREND AUF DEM TRAINIERTEN ALGORITHMUS
PROCÉDÉ D'ENTRAÎNEMENT D'UN ALGORITHME ET PROCÉDÉ DE FOURNITURE D'UN SERVICE BASÉ SUR L'ALGORITHME ENTRAÎNÉ

(43) Date of publication of application: 14.06.2023
(73) Proprietor: Fundación Tecnalia Research & Innovation, 48160 Derio - Bizkaia (ES); Universidad del Pais Vasco - Euskal Herriko Unibertsitatea (UPV/EHU), 48940 Leioa (Bizkaia) (ES)
(72) Inventor: Lage Serrano, Oscar, Derio (Bizkaia) (ES); Regueiro Senderos, Cristina, Derio (Bizkaia) (ES); Seco Aguirre, Iñaki, Derio (Bizkaia) (ES); Urquizu Gomez, Borja, Derio (Bizkaia) (ES); Gomez Ramos, Eneko, Derio (Bizkaia) (ES); Gámiz Ugarte, Idoia, Derio (Bizkaia) (ES); Gonzalez Rodríguez, Marta, Derio (Bizkaia) (ES); Gutierrez Agüero, Iván, Derio (Bizkaia) (ES); Villar Rodriguez, Esther, Derio (Bizkaia) (ES)
(74) Representative: Balder IP Law, S.L.

(56) References cited:
- US-A1- 2019 334 716
- XIE PENGTAO ET AL: "Under review as a conference paper at ICLR 2015 CRYPTO-NETS: NEURAL NETWORKS OVER EN-CRYPTED DATA", 24 December 2014 (2014-12-24), XP093358982, Retrieved from the Internet <URL:https://arxiv.org/pdf/1412.6181v2>
- NATHAN DOWLIN ET AL: "CryptoNets: Applying Neural Networks to Encrypted Data with High Throughput and Accuracy", PROCEEDINGS OF THE 33RD INTERNATIONAL CONFERENCE ON MACHINE LEARNING, vol. 48, 20 June 2016 (2016-06-20), pages 201 - 210, XP055390384

## Description

### TECHNICAL FIELD

The present invention relates to training of predictive algorithms.

### STATE OF THE ART

Predictive algorithms, also referred to as predictive models, are generally based on techniques for extracting information from data to build an algorithm designed to be able to predict an output from a given input. Examples of predicting an output may be predicting future trends or predicting behavior patterns in different technical fields and business areas. There exist different types of machine learning algorithms that can be used to generate predictive outputs from analyzed data, such as supervised learning prediction algorithms, classification algorithms and unsupervised learning/clustering algorithms. Non-limiting examples of supervised learning prediction algorithms, are: linear regression, multiple regression, decision tree regression, random forest regression and K-Nearest Neigbors (KNN) regression. Non-limiting examples of classification algorithms, are: logistic regression, perceptron, support vector machine (svm), naïve bayes, decision tree classifier, random forest classifier and K-Nearest Neigbors (KNN) classifier. Non-limiting examples of unsupervised learning/clustering algorithms, are: K-means and hierarchical clustering.

A predictive algorithm needs to be trained with training data. Training data typically include input data of the type to be entered into the predictive algorithm, so that output data of the type of the desired predictive output can be obtained.

An algorithm provider, also referred to as service provider, typically provides services for different consumers that may have different expectations and needs. For example, the algorithm provider can provide a prediction service in different technical fields, such as predictive maintenance, product improvement, failure detection or prevention, quality inspections, facial/voice recognition, virtual assistants, autonomous car, vehicle fleet coordination, energy consumption prediction, closed auctions, medical diagnostics, fraud detection, risk scoring, etc. An algorithm provider may have its own dataset with which an algorithm (model) has been trained. To provide an efficient service, the algorithm should be improved, for example by executing it with other datasets.

However, an algorithm provider does not generally have additional proprietary datasets. Therefore, he/she needs to resort to request federated training, also referred to as federated learning. As explained in Wikipedia (https://en.wikipedia.org/wiki/Federated_learning), federated learning is a machine learning technique that trains an algorithm across multiple decentralized edge devices or servers holding local data samples, without exchanging them. Federated learning enables multiple actors to build a common, robust machine learning model without sharing data, thus allowing to address critical issues such as data privacy, data security, data access rights and access to heterogeneous data.

Document US2019/0334716A1 describes a decentralized method for developing machine learning models using homomorphic encryption and blockchain smart contract technology to realize a secure, decentralized system and privacy-preserving computing system which incentivizes the sharing of private data or at least the sharing of resultant machine learning models from the analysis of private data. The method uses a homomorphic encryption (HE)-based encryption interface designed to ensure the security and privacy-preservation of the shared learning models, while minimizing the computation overhead for performing calculation on the encrypted domain and, at the same time, ensuring the accuracy of the quantitative verifications obtained by the verification contributors in the cipherspace.

Xie et al., "Crypto-Nets: Neural Networks over Encrypted Data", arXiv:1412.6181v2, 24 December 2014, discloses applying neural networks to encrypted data using homomorphic encryption. A data owner encrypts input data and sends the ciphertexts to a cloud service holding a trained neural-network model. The cloud evaluates the neural network on the encrypted data and returns an encrypted prediction result, which can be decrypted only by the data owner. The document discusses replacing or approximating non-polynomial neural-network functions, such as sigmoid, rectified-linear activation functions and max pooling, by polynomial functions suitable for homomorphic evaluation.

Dowlin et al., "CryptoNets: Applying Neural Networks to Encrypted Data with High Throughput and Accuracy", Proceedings of the 33rd International Conference on Machine Learning, JMLR W&CP, vol. 48, 2016, further discloses CryptoNets for performing neural-network inference on encrypted data. The described system uses a trained neural network hosted by a cloud service, homomorphic encryption of user data, polynomial-compatible network modifications, such as square activation functions and scaled mean pooling, and returns encrypted prediction outputs to the data owner. The document reports implementation details for the MNIST classification task, including batching/SIMD processing, parameter selection and throughput/latency figures.

However, conventional architectures of federated learning and, in particular, of federated machine learning (FML) have several drawbacks: (1) The models trained locally by each participant must be shared in order to train the global model. This causes loss of privacy because from the local models, in some cases, private information of the participant can be extracted. (2) There is a lack of traceability of participation, which could lead to problems of repudiation or problems for compensation (rewards). (3) Once the model has been trained and the algorithm has been obtained, when a service based on the algorithm is going to be provided, there is loss of confidentiality of both the algorithm and the data on which it is applied.

### DESCRIPTION OF THE INVENTION

The present invention aims at overcoming the above-mentioned drawbacks. The present invention provides a computer-implemented method for training an algorithm or model. Different elements or entities are involved in the method: at least one algorithm provider having algorithms to be trained; at least one data owner having datasets; and a blockchain network in which a training management provider is deployed.

The trained model is generated at a multi-party computation (MPC) peer-to-peer network specially created for the training of the algorithm. All participating data owners belong to this MPC network. Creating an MPC network (and corresponding MPC code) guarantees confidentiality of the sharing of information, because the local training results performed by each participating data owner are not sent to the algorithm provider. This way, private data of the participating data owners is kept private and confidential. The method may also require a storage peer-to-peer network, in which a distributed file system is deployed.

The algorithm to be trained/optimized may be a supervised learning prediction algorithm, such as linear regression, multiple regression, decision tree regression, random forest regression and K-Nearest Neigbors (KNN) regression; a classification algorithm, such as logistic regression, perceptron, support vector machine (svm), naïve bayes, decision tree classifier, random forest classifier and K-Nearest Neigbors (KNN) classifier; or an unsupervised learning/clustering algorithm, such as K-means and hierarchical clustering.

The algorithm provider may have already trained the algorithm, for example with its own dataset or with other datasets. Alternatively, the algorithm provider may have not yet trained the algorithm. For example, he/she may not have suitable datasets to train the algorithm.

The method is implemented in a plurality of processing devices (or in one processing devices according to additional aspects of the disclosure which are not covered by the scope of the appended claims), which can be part of a processing system. The plurality of processing devices comprises at least one memory that may include instructions, for example in the form of a computer program code, so that a method according to the present invention is carried out upon execution of the instructions. The processing device may comprise a communications module, at least in embodiments in which it is communicatively coupled with other processing devices. Each element or entity includes one or more processing devices.

In a first aspect of the invention, a computer implemented method for training algorithms or for obtaining optimized algorithms or models, is disclosed, the method being implemented in a plurality of processing devices. The method comprises the steps of: providing at least one data owner having datasets, at least one algorithm provider having algorithms to be trained and a blockchain network in which a training management provider is deployed, wherein the training management provider is a smart contract that is automatically executed when it is interacted with, and wherein each of: the at least one data owner, the at least one algorithm provider and the blockchain network, include one or more processing devices; sending, by an algorithm provider, a training request to the training management provider, the training request including a training manifest that determines execution features of the training of the algorithm to be trained and minimum requirements to be met by the training; sending, by the training management provider, the training manifest to the at least one data owner; sending, by each data owner willing to participating in training the algorithm, an acceptance to the training management provider, the acceptance including an acceptance manifest comprising means ensuring the identity of the participating data owner; sending, by the training management provider once the minimal requirements have been met, the acceptance manifests to the algorithm provider; generating, by the algorithm provider, a compiled multi-party computation code based on the received acceptance manifests; sending, by the algorithm provider, the algorithm to be trained and the compiled multi-party computation code to the one or more data owners participating in training the algorithm; training, by each participating data owner, the received algorithm with its corresponding datasets creating a local model; executing, by the participating data owners and the algorithm provider, the compiled multi-party computation code generating a multi-party peer-to-peer network between them; and generating by means of the multi-party peer-to-peer network, a model based on the local models and the algorithm to be trained.

In embodiments of the invention, the algorithm provider has its own dataset, in which case the algorithm provider can locally train its own dataset. In other embodiments, the algorithm provider does not have its own dataset.

In embodiments of the invention, when the algorithm to be trained has been previously trained, the step of generating the model comprises optimizing the model by aggregating the local models and the algorithm to be trained.

In embodiments of the invention, the acceptance manifest comprises an IP address of the participating data owner, a data owner certificate and optionally a public key of the participating data owner.

In embodiments of the invention, the acceptance manifest comprises an amount of data to be used to train the algorithm.

In embodiments of the invention, the method comprises, prior to sending the training request by the algorithm provider, sending, by the data owners and the algorithm provider, a subscription request to the training management provider.

In embodiments of the invention, the step of sending the algorithm to the data owners comprises the steps of: generating, by the algorithm provider, a first symmetric key for the algorithm to be trained; encrypting, by the algorithm provider, the algorithm with the first symmetric key; storing, by the algorithm provider, the coded algorithm in a distributed file system deployed in a storage peer-to-peer network; sending, by the distributed file system, a first hash code to the algorithm provider indicating the location of the coded algorithm; coding, by the algorithm provider, the symmetric key with a shared secrete protocol, wherein the coded symmetric key for each data owner is associated to a public key of the respective data owner; sending, by the algorithm provider, the hash code and the corresponding coded symmetric key for each data owner to the training management provider; sending, by the training management provider, a first access event to each data owner participating in training the algorithm, the first access event comprising the first hash code and the corresponding coded first symmetric key associated to the data owner; accessing by the data owners, to the coded algorithm in the distributed file system with the first hash code; applying, by the data owners, a first inverse shared secrete protocol with a respective first private key to obtain the first symmetric key; and decoding, by the data owners, the coded algorithm with the first symmetric key to obtain the algorithm to be trained.

In embodiments of the invention, the distributed file system is an Interplanetary File system.

In embodiments of the invention, the step of sending the compiled multi-party computation code to the data owners comprises: generating, by the algorithm provider, a second symmetric key for the algorithm to be trained; encrypting, by the algorithm provider, the compiled multi-party computation code with the second symmetric key; storing, by the algorithm provider, the encrypted compiled multi-party computation code in the distributed file system; sending, by the distributed file system, a second hash code to the algorithm provider indicating the location of the encrypted compiled multi-party computation code; encrypting, by the algorithm provider, the second symmetric key with a respective second shared protocol associated to each data owner participating in training the algorithm, each second shared secret protocol being associated to the public key of the corresponding data owner; sending, by the algorithm provider, the second hash code and the encrypted second symmetric keys to the training management provider; sending, by the training management provider, a second access event to each data owner participating in training the algorithm, the second access event comprising the second hash code and the corresponding encrypted second symmetric key associated to the data owner; accessing, by the data owners, to the encrypted compiled multi-party computation code in the distributed file system with the second hash code; applying, by the data owners, a second inverse shared secrete protocol with a respective second private key to obtain the second symmetric key; and decoding, by the data owners, the encrypted compiled multi-party computation code with the second symmetric key to obtain the compiled multi-party computation code.

In embodiments of the invention, the step of training, by each data owner, the algorithm with its corresponding dataset, comprises: sending, by each data owner participating in the training, a start training notification to the training management provider, the start training notification indicating the beginning of the training of the algorithm; and sending, by each data owner participating in the training, a finish training notification to the training management provider, the finish training notification indicating the completion of the training of the algorithm.

In embodiments of the invention, the execution features of the training are selected form a group comprising: a kind of training, a kind of data from the datasets, a minimum amount of data from each dataset and any combination thereof.

In embodiments of the invention, the minimal requirements to be met by the training are selected from a group comprising: a minimum number of data owners participating in the training, a particular list of data owners required to participate in the training, a maximum waiting time to reach the data owners to participate in the training and any combination thereof.

In embodiments of the invention, the algorithm to be trained is configured to at least one of the following: determine whether a potential anomaly exists in the operation of an apparatus or system, or in the behaviour of a process; or determine a configuration of an apparatus or system intended to improve the operation and/or solve a potential anomaly thereof; determine whether a potential anomaly or illness exists in a human or animal body part.

In a second aspect of the invention, a computer implemented method for providing a service based on an optimized model is disclosed. The method comprises: generating the optimized model by performing a method as previously described in the first aspect of the invention; recoding, by the algorithm provider, the optimized model in a homomorphic plane; sending, by a user client, a service request indicating the particular service requested; sending, by the user client, user client data homomorphically encrypted with a user data homomorphic public key to the algorithm provider; applying, by the algorithm provider, the homomorphically encrypted user client data to the homomorphically recoded optimized model; sending, by the algorithm provider, the homomorphically encrypted results of the application of the homomorphically encrypted user client data to the homomorphically recoded optimized model to the user client; decrypting, by the user client, the homomorphically encrypted results with its homomorphic secret key.

In embodiments of the invention, the method comprises, prior to sending by a user client a service request indicating the particular service requested: registering the recoded algorithm together with its functional features of interest as an algorithm offered by the algorithm provider.

In embodiments of the invention, the the service comprises: solving a problem requiring classification of user client data or prediction based on user client data, the problem defining either a configuration or operation of an apparatus or system, or behaviour of a process; and determining at least one of the following, based on the solution to the problem: whether a potential anomaly exists in the operation of the apparatus or the system, or in the behaviour of a process; and a configuration of the apparatus or the system intended to improve the operation and/or solve the potential anomaly thereof, or a configuration of any apparatus or system in the process intended to improve the behaviour and/or solve the potential anomaly thereof.

In embodiments of the invention, the service comprises: solving a problem requiring classification of user client data or prediction based on user client data, the problem defining a behaviour of a human or animal body part; and determining, based on the solution to the problem, whether a potential anomaly exists in the behaviour of the human or animal body part.

The proposed computer implemented methods are applicable to a number of industries including defense, telecommunications, IoT and pharmaceutics. The methods may be applied for optimization of apparatuses and/or processes, and/or for detection of anomalies in the apparatuses and/or processes.

In embodiments of the invention, the service requested by the client relates to one of: detection of a potential illness in medical measurements (e.g. images, blood samples, etc.); decision-making of a central unit of an autonomous vehicle; control of an electric device or machine, including predictive maintenance, product improvement, failure detection or prevention and quality inspections; control of a production line; control of a factory; facial/voice recognition; virtual assistants; vehicle fleet coordination; energy consumption prediction; detection of fraudulent bank and credit card transactions; and credit-scoring for insurance and loans. For example, when the requested service relates to medical diagnosis, the different datasets may comprise features of medical images and/or blood samples, that allows detecting potential illnesses with the algorithm or model of the algorithm provider. For example, when the requested service relates to an autonomous vehicle, the different datasets may comprise data captured from the environment, such as with one or more sensors, GPS, cameras, etc., that allows determining whether e.g. the car speeds up or not. For example, when the requested service relates to analyzing data from electrical devices, machines, production lines, factories, etc., so as to establish correct operation, malfunction, incorrect processing of raw materials or workpieces, etc., the different datasets may include data gathered from different sensors of the devices and/or machines.

Additional advantages and features of the invention will become apparent from the detail description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 schematically illustrates how several users (in this case, one algorithm provider and six data owners) subscribe to a smart contract implemented in a training management provider deployed in a blockchain network, according to embodiments of the present invention.
Figure 2 schematically illustrates how a federated training is orchestrated according to embodiments of the present invention.
Figure 3 schematically illustrates how a model to be trained is securely shared between the algorithm provider and the data owners according to embodiments of the present invention.
Figures 4 and 5 schematically illustrate processes for sharing a compiled MPC program among a cluster of data owners, according to embodiments of the present invention.
Figure 6 schematically illustrates how training is locally performed at each data owner according to embodiments of the present invention.
Figure 7 schematically illustrates how one or more aggregated models are obtained according to embodiments of the present invention.
Figure 8 schematically illustrates how the predictive service is confidentially provided by the algorithm provider according to embodiments of the present invention.
Figure 9 shows a block diagram of an architecture for implementing the proposed computer implemented method according to embodiments of the present invention.

### DESCRIPTION OF A WAY OF CARRYING OUT THE INVENTION

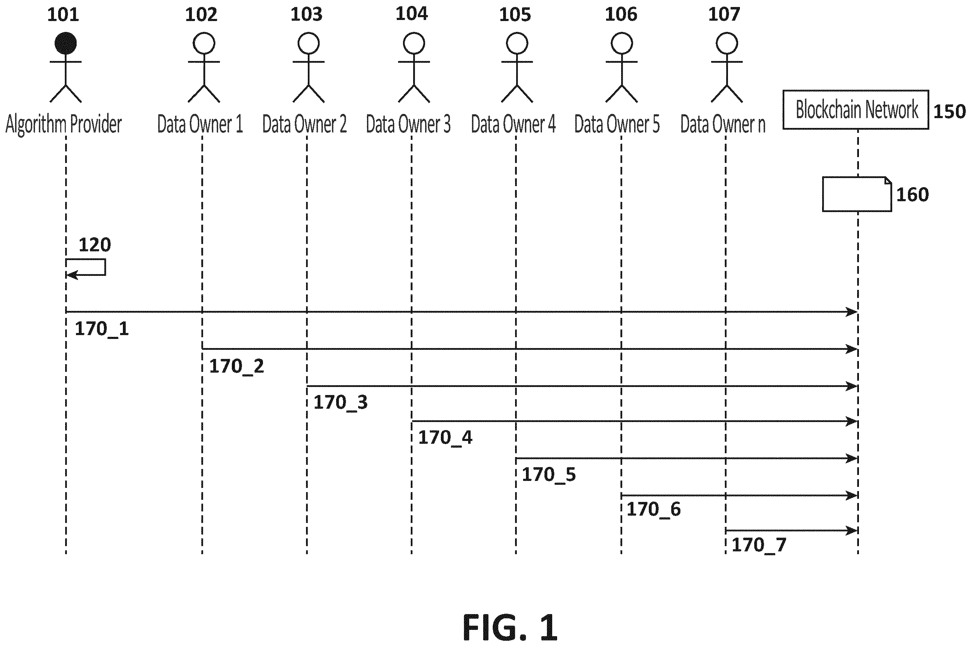

Figure 1 shows an algorithm provider 101 and a plurality of data owners (also referred to as nodes) 102-107. The algorithm provider 101 can provide services for different consumers (not shown) having different backgrounds and needs. An example of service the algorithm provider 101 may provide is a failure prediction in an industrial machine, or the detection of a potential illness in medical measurements, or the identification of an obstacle by a central unit of an autonomous vehicle, or an energy consumption prediction in a power distribution network.

To provide the prediction service, the algorithm provider 101 has an algorithm (or, in general, a plurality of algorithms). The algorithm provider 101 may have its own dataset with which an algorithm can be trained or has been trained. This is represented in Figure 1 as a local training 120 of the algorithm. Alternatively, the algorithm provider 101 may not have proprietary datasets with which he/she can train the algorithm(s). The algorithm provider 101 needs to train the algorithms, or to improve the performed local training of the algorithms, with data owned by other entities, to provide an efficient service to consumers. The algorithm can be improved, for example, by executing it with other datasets, for which the algorithm provider 101 requests federated training. The trained (or improved) algorithm(s) (also referred to as model(s)) will be used to provide the prediction service. From now on, the term "algorithm" should be understood as a single algorithm or as a set of algorithms.

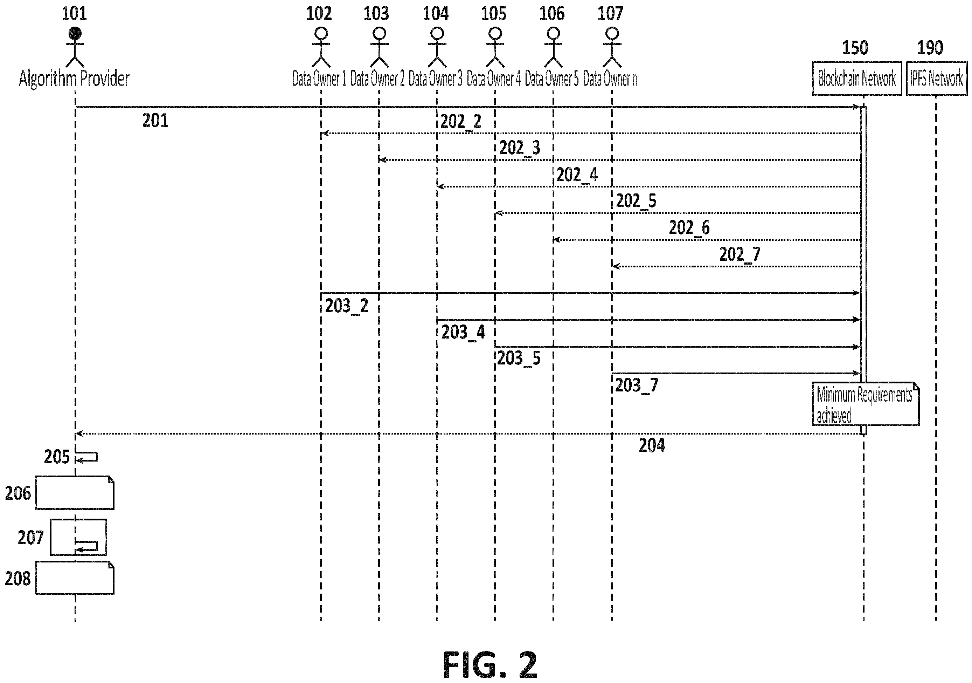

To request and execute federated training, a blockchain network 150 is required. In the blockchain network 150, a training management provider 160 has been previously deployed. The training management provider 160 is a training management smart contract (a code implementing a training management contract) executing on the blockchain network 150 and to which the data owners 102-107 and the algorithm provider 101 are subscribed. When a participant (for example algorithm provider 101 or data owner 102-107) interacts with the training management provider 160, the training management provider 160 automatically performs certain actions. Depending on the type of interaction, an output may or may not be generated. For example, as shown in Figure 1, when a "subscribe" operation 170_1 - 170_7 is executed, the training management provider 160 automatically registers the subscribing user but it does not generate any output. In contrast, in another example, when a "round_start_request" operation is received (see operation 201 in Figure 2), the training management provider 160 automatically checks which nodes are subscribed (since it has registered them in a previous call) and is scheduled to generate a notification event to those nodes. In summary, the smart contract (training management provider) 160 is a program that is automatically executed when it is interacted with (if it is not interacted with, i.e. if there is no input, it does not perform any operation).

The algorithm provider 101 and a plurality of other actors (users) 102-107 that may be interested in performing training (either as providers of algorithms to be trained/improved and/or as data owners providing datasets) must subscribe to training management provider 160. This is represented in Figure 1 as subscribing stages 170_1 - 170_7. The goal of the training management provider 160 is to manage different training campaigns that could be requested by different subscribed actors 101-107. The blockchain network 150 provides reliability, automation and traceability of the different trainings. In the scheme of Figure 1 there are 7 actors 101-107 subscribed to the training management provider: the algorithm provider 101 and six data owners 102-107 which, in this particular case, only participate as datasets providers (they do not train proprietary algorithms that they may have). However, in a more general scenario, data owners 102-107 may also be algorithm providers wanting to train their own algorithms.

As shown in Figure 2, the orchestration or arrangement of the training starts when the algorithm provider 101 indicates its intention to perform a training with certain features, such as execution features (for example, type of training, type of data required, minimum number of data, etc.) and minimum requirements to be met by the training (for example, minimum number of participants, mandatory participants if any, maximum waiting time for participants, etc.). The algorithm to be trained is not shared at this stage. To do so, the algorithm provider 101 makes a training request 201 to the training management provider 160 deployed at the blockchain network 150. The training request includes a training manifest that determines execution features of the training of the algorithm to be trained and minimum requirements to be met by the training.

The execution features (also referred to as training features) refer to characteristics that each data owner must know and take into account in order to know if he/she can participate in the training campaign or not. In other words, the execution features affect the data owners. The minimum requirements do not apply to each data owner in particular, but are the requirements that must be met for the training campaign to be valid. In other words, the minimum requirements affect the specific training campaign. The smart contract (training management provider) 160 must be aware of the minimum requirements of the training campaign.

The execution features of the training may be selected form a group comprising: a kind of training, a kind of data from the datasets, a minimum amount of data from each dataset and any combination thereof. As a matter of example, with no limiting purpose, the kind of training can be an exponential survival analysis of an industrial machine, and the kind of data can be data associated to dripping variables of an industrial machine. The minimum requirements to be met by the training may be selected from a group comprising: a minimum number of data owners participating in the training, a particular list of data owners required to participate in the training, a maximum waiting time to reach the data owners to participate in the training and any combination thereof. For example, the training request 201 may take the following form: round_start_request (id, training_features, minimum_requirements), wherein field "id" is an identifier for the training campaign, that is to say, a unique set of characters (for example a combination of numbers, letters and any other character) within the training management provider 160 which unambiguously identifies the requested training campaign, field "training_features" includes the execution features required for the requested training and field "minimum_requirements" represents minimum requirements to be met in the training.

Optionally, the algorithm provider 101 may indicate the method of sharing the model (algorithm to be trained) and an MPC code to be executed. For example, it may indicate that a secure sharing system is required. This may be indicated in the training request 201.

Upon reception of the training request 201, the training management provider 160 automatically issues an event 202_2 - 202_7 notifying all the subscribed actors (data owners) 102-107 of the new available training campaign, indicating the training features (execution features). For example, event 202_2 - 202_7 (which is a same event sent to all subscribed data owners 102-107) may take the following form: round_start (id, training_features), wherein "id" and "training_features" are as described above. As can be seen, at this stage the minimum requirements are not shared with the data owners 102-107 because they do not need to be aware of them. It is the training management provider 160 who needs to be aware of the minimum requirements. For example, the training management provider 160 may terminate the enrollment phase of data owners in the campaign once the proposed minimum requirements have been met.

Then, those data owners of the set of data owners 102-107 that can or are willing to participate, proceed to accept the participation by sending an acceptance call 203_2, 203_4, 203_5, 203_7. When they accept to participate, data owners 102, 104, 105 and 107 must share certain information. The acceptance call includes an acceptance manifest. The acceptance manifest may take different forms. The acceptance manifest comprises means ensuring the identity of the participating data owner. The identity of the participating data owners may be ensured in different manners, depending on the technology used. In embodiments of the invention, the identity of the participating data owners is ensured by including in the acceptance manifest an IP address of the participating data owner 102, 104, 105, 107 and a data owner certificate. The public key of the participating data owner can optionally be included. In particular, when a secure sharing system is used, for example a secure framework like SCALE MAMBA, which involves a multi-party computation (MPC) code, the acceptance manifest includes an IP address of the participating data owner 102, 104, 105, 107 and a data owner certificate. These features ensure the identity of the participating data owners when the technology used is SCALE-MAM BA.

The IP address of the data owner is required to later execute an MPC code, because a peer-to-peer network including all participating data owners must be created. The peer-to-peer network is preferably created through connections between IP addresses. The data owner certificate is also required to securely execute the MPC code, because it is used to guarantee the identity of each participating data owner within the mentioned peer-to-peer network. The public key of the participating data owner 102, 104, 105, 107 is preferably included in order to securely receive the model and the MPC code to be executed. A public key represents a participating data owner in the secure sharing system, in order to share confidential information using asymmetric encryption. Public keys will be required later if, in order to share the model to be trained and compiled MPC program(s), a secure sharing system based on the secure sharing of repositories, is used.

In certain secure frameworks, like SCALE MAMBA, the acceptance manifest also comprises an amount of data ("data_quantity") to be used by the participating data owner to train the algorithm. In other words, it is the amount of data with which they are going to participate in the training. It is remarked that the data as such with which data owners are going to participate in the training is never shared.

In the example, data owners 102, 104, 105 and 107 have accepted to participate by sending the following call 203_2, 203_4, 203_5, 203_7: round_accept (id, data_quantity, IP, cert, public_key, additional_data_features), wherein field "id" is the training identification, field "data_quantity" is an amount of data to be used by this participating data owner to train the algorithm, field "IP" is an IP address of the data owner, field "cert" is the data owner certificate and field "public_key" is the public key of the participating data owner.

Field "additional_data_features" is also optional. Additional data features enable, for example, perform more advanced training executions or optimized training executions. Or additional data features may be suitable to optimize or divide (clusterize) the training to be made. Non-limiting examples of this additional information, are: location, date, accuracy, etc. This information can be included in a field called "additional_data_features". For example, an additional feature may be "geographical localization of the participating data owner". In this case, and if the algorithm provider is interested, only data owners with certain geographical localization would be allowed to participate. Or the "geographical localization" could be used to create clusters (as explained later).

Data owners 103 and 106 may not want to participate or may not meet the participation requirements indicated for example in the field "training_features" of the training request 201.

When the established minimum requirements for training (for example, minimum number of participants, mandatory participants if any, maximum waiting time for participants, etc.) have been met, the training management provider 160 automatically issues an event 204 to the algorithm provider 101 with the information that has been shared by each of the actors 102, 104, 105 and 107 that have agreed to participate in the training. Event 204 includes the acceptance manifests of the data owners 102, 104, 105, 107 having accepted to participate in the training of the algorithm. For example, the acceptance manifest may include, for each participating data owner: IP address, certificate, id, amount of data with which they will participate in the training, public key and optionally additional features of the data. For example, event 204 may take the following form: participants_data (id, [data_quantity...], [IPs...], [certs...],[public_keys...], [additional_data_features...]).

Optionally, by analyzing the additional features of the data (if there are any), clusters can be defined, so that the training campaign (and its subsequent aggregation) can be segmented into groups. This is represented in Figure 2 as a FML_clusters_definition 205, which may take the following form: FML_clusters_definition ([additional_data_features...], [IPs...]). This is done by the algorithm provider 101. The algorithm provider 101 may create the clusters based on a certain additional feature. The algorithm provider 101 is aware of the IP address of each participating data owner and can create clusters based on these IP addresses. There may be different analyses or ways of generating clusters, for example: depending on each specific use case, by location or by amount of data, among others. If clusters are defined, for each cluster, the participants involved will be identified, so that, when after the training the results thereof must be aggregated, the aggregation is done by cluster. Once the clusters are defined, an optimal number of clusters and/or an optimal number of participants per cluster for the subsequent training campaign is obtained. This is represented in Figure 2 as 206. The algorithm provider 101 is part of all the clusters, because the algorithm provider 101 will subsequently receive the results of the aggregations of each cluster.

Once the clusters are created (if they are created, because it is optional), and with the information received from the participating data owners 102, 104, 105 and 107 (including for example IP address, certificate, public key and amount of data with which they will participate in the training), the algorithm provider 101 is able to generate a compiled multi-party computation (MPC) program or code for each cluster (or for the complete group of participating data owners 102, 104, 105, 107 if no clusters are created). The compiled MPC program or code performs, when executed, an aggregation of local models (local training results) to create a global model. It executes the aggregation. Therefore, it can be called compiled MPC-based aggregation program or code. The algorithm provider 101 will automatically create the MPC code which will perform the aggregation in a secure way. The MPC-based aggregation code is the program in which the aggregation function is implemented. The security functionality (confidentiality or privacy) is given by the MPC technology. Confidentiality is inherent to the MPC technology. The MPC-based aggregation code will define all the necessary relationships between all the participants, through their IP addresses, so that each participating data owner will execute specific parts of the aggregation (this is how MPC works at a high level). This means that the execution of each part separately does not give "coherent" results. In other words, it is necessary that all participants execute the MPC code. The MPC code will be received by each participant and, when it is executed in all of them, a peer-to-peer network (in particular, an MPC network) is created between all of them. Then, a corresponding part of the aggregation takes place in each participant data owner. When all participants have executed the MPC code, the final joined aggregation is obtained.

Therefore, the compiled MPC-based aggregation programs (one per cluster) will be later required to subsequently perform a confidential and private aggregation of local training results of each of the participants in each cluster. The generation of the compiled MPC programs is represented as 207 in Figure 2 and may take the following form: generate_compiled_MPC_program_ cluster_n ([data_quantity...], [IPs...], [certs...]). This is done in a loop that repeats as many times as number of created clusters. The result of this loop is a compiled MPC-based aggregation program for each cluster (208 in Figure 2).

If no clusters are created (in other words, all participating data owners 102, 104, 105 and 107 belong to a single cluster), once event 204 is received by the algorithm provider 101, a single compiled MPC-based aggregation program or code 208 is obtained. For simplicity, reference number 208 is used in Figure 2 to refer to either a single compiled MPC code (in the event no clusters are created) or to each of the compiled MPC codes for each cluster (in the event there are several clusters).

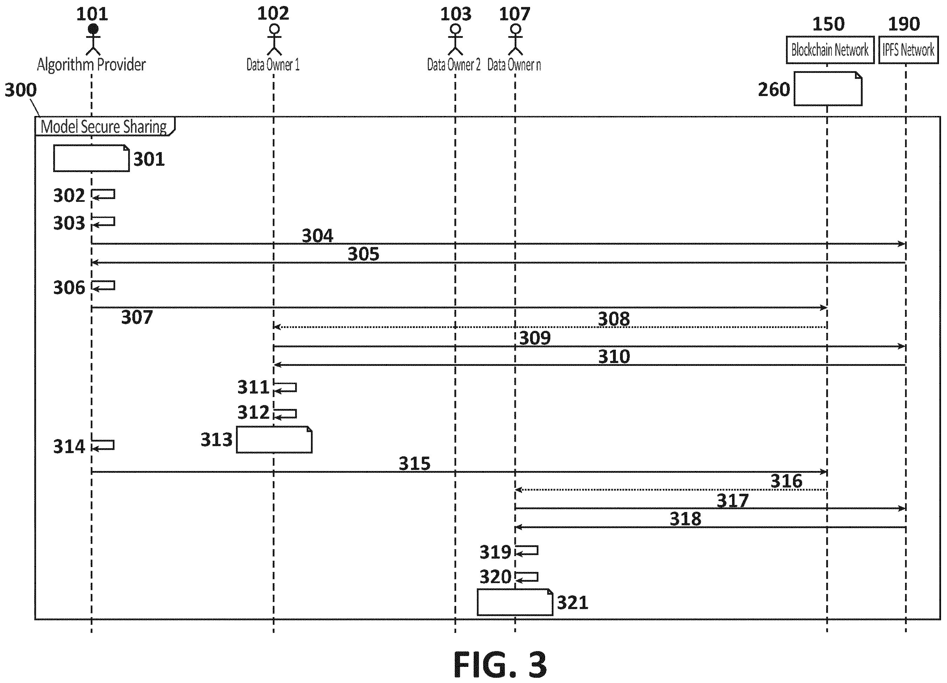

The algorithm provider 101 now has a compiled MPC program or code (or a compiled MPC program or code for each cluster, if there are several clusters) and a model or algorithm 301 that the algorithm provider 101 wants to be trained (or improved or further trained) by the participating data owners 102, 104, 105 and 107 with their own datasets. The model or algorithm 301 can then be securely shared between the algorithm provider 101 and the participating data owners 102, 104, 105 and 107. This is shown in Figure 3. The model 301 is shared so that all participating data owners 102, 104, 105 and 107 (that may be grouped in clusters) know what they are going to train with their own data. The compiled MPC-based aggregation program (or compiled MPC-based aggregation program for each cluster) is shared so that the participating data owners can later participate in the confidential and private aggregation (or, if there are clusters, so that the participating data owners of each cluster can later participate in the confidential and private aggregation per cluster).

In embodiments of the invention, to share these two elements (model 301 and compiled MPC-based aggregation program(s) 208), a secure sharing system based on the secure sharing of repositories is preferably used, for which the public key of each participating data owners 102, 104, 105 and 107 (which has preferably been previously sent in the round_accept calls 203_2, 203_4, 203_5, 203_7) is required. This secure sharing system is based on the blockchain network 150, in particular on a secure access management provider 260 that has been previously deployed in the blockchain network 150, and on a distributed file system deployed in a storage peer-to-peer network 190 for the storage of the information to be shared. The secure access management provider 260 is a secure access management smart contract. The goal of the secure access management provider 260 is to manage the secure access to data (stored in the distributed file system) by the involved data owners 102, 104, 105, 107. The distributed file system is preferably an Interplanetary File (IPF) system, in which case the storage peer-to-peer network 190 is an IPFS network 190. The storage peer-to-peer network 190 has already been deployed and is out of the scope of the present invention. The smart contract for the management of secure access to IPFS repositories (as represented by IPFS network 190) has been previously deployed. The process to be followed to share the model 301 is as follows (see Figure 3):
First, a symmetric key is generated. It is a symmetric key with which the model 301 to be shared with data owners participating in the training will be coded (also referred to as cyphered or encrypted). This is done at stage 302 (generate_model_symmetric_key). Next, the data model 301 is cyphered (encrypted) with the generated symmetric key. This means that only those who know the symmetric key will be able to decrypt it. This is done at stage 303 (encrypt (model, model_symmetric_key)). Then, at stage 304, the encrypted data model is stored in the distributed file system deployed in the peer-to-peer network 190 (save (encrypted model)), which is preferably an IPFS network. Storing the encrypted model in the IPFS network 190 implies a decentralized, more secure, storing of the model. Only those who know the symmetric key can decipher it (for the time being, only the algorithm provider 101). Next, at stage 305, the IPFS network 190 sends the algorithm provider 101 the hash with which the stored encrypted model can be accessed (data_saved (IPFS_hash_encrypted_model). The hash indicates where the encrypted model is.

Now, the symmetric key must be shared with the participating data owners 102, 104, 105 and 107, so that they can decipher the model. To do so, the symmetric key is encrypted, for example with a shared secret protocol or with an integrated encryption scheme (IES), whose security is based on the computational Diffie-Hellman problem. For example, the symmetric key can be encrypted with a shared secret Discrete Logarithm Integrated Encryption Scheme (DLIES) or with a shared secret Elliptic Curve Integrated Encryption Scheme (ECIES), also referred to as Elliptic-Curve Diffie-Hellman protocol, associated to each participating data owner 102, 104, 105 and 107. Preferably, the Elliptic-Curve Diffie-Hellman protocol is used. Each shared secret protocol (for example, ECIES) (one per data owner) is obtained from, or associated to, the public key of the data owner to be authorized. The public key of each data owner has preferably been obtained in the information received from each participant at stage 204. The symmetric key can only be decrypted with a shared secret ECIES associated to the private key of each data owner 102, 104, 105 and 107. This means that only that specific data owner will be able to decrypt it. The private key is the one associated with the public key that has been previously provided when the data owner has subscribed to the training events; this private key is the user's own key to be able to operate. Although it could be received externally, in the present case, since the training management provider 160 deployed in the blockchain network 150 manages the sharing of data, a certification authority associated to the blockchain network 150 preferably grants the keys to the users.

In Figure 3, stage 306 represents the encryption of the model symmetric key with a shared secret protocol (for example, the ECIES) of data owner 102 (encrypt (model_symmetric_key, ECIES_data_owner_102)). Stage 314 represents the encryption of the model symmetric key with a shared secret protocol (for example, the ECIES) of data owner 107. For conciseness, the stages of model secure sharing with data owners 104 and 105 have been omitted, since they are the same as for data owners 102 and 107.

Stages 307-313 refer to the secure sharing of the model with data owner 102. Similar stages are used for securely sharing of the model with the other data owners 104, 105, 107. For example, stages 315-321 refer to the secure sharing of the with data owner 107. The corresponding stages for data owners 104 and 105 are not shown nor described for conciseness, since stages 307-313 or stages 315-321 apply to them, mutatis mutandis. Referring now to stages 307-313, first the hash of the IPFS network 190 with which the stored encrypted model can be accessed and the symmetric key cyphered with the shared secret protocol (such as ECIES) associated to the private key of data owner 102, are sent to the secure access management provider 260. This is done at stage 307 (save_key (IPFS_hash_encrypted _model, ECIES_model_symmetric_key_data_owner_102)).

In reply to this call (stage307), the secure access management provider 260 automatically generates an event 308 which is sent to data owner 102. This event 308 comprises the IPFS network hash to access the stored model and the symmetric key encrypted with shared secret protocol (for example ECIES) associated with the participating data owner 102. This event 308 is for example: data_available (IPFS_hash_encrypted_model, ECIES_model_symmetric_key_data_owner_102). With the hash of the IPFS network 190, the data owner 102 can access the cyphered model at the storage peer-to-peer network 190, as shown at stage 309: obtained_encrypted_model (IPFS_hash_encrypted_model). In reply to this call (stage 309), the storage peer-to-peer network 190 sends (stage 310) the encrypted model to data owner 102. Then, the data owner 102 applies the reverse shared secret protocol (for example ECIES) with its private key to the symmetric key encrypted with shared secret protocol, so that it obtains the symmetric key. This is shown at stage 311: decrypt (ECIES_model_symmetric_key_data_owner_102). With the symmetric key, the data owner 102 can decrypt the encrypted model, as shown at stage 312: decrypt (encrypted_model, model_symmetric_key).

The data owner 102 has thus obtained the model 301 (stage 313) and can therefore start the training of the model 301 with its own dataset.

As explained, this process (stages 307-313) is repeated for each participating data owner 104, 105, 107, until all of them have obtained, in a secure way, the model to be trained 301.

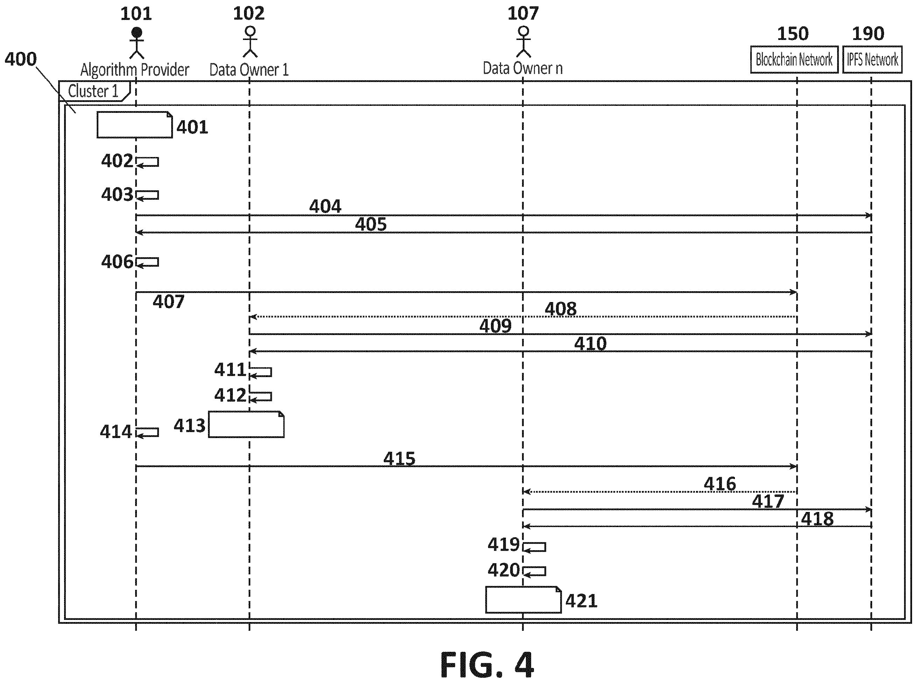

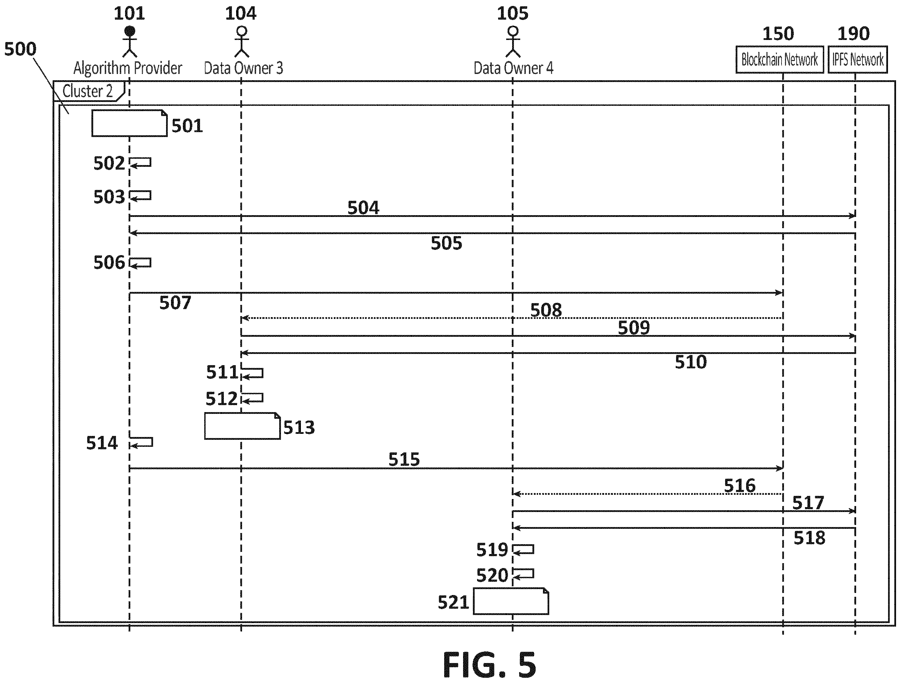

A similar process 400, 500 is performed to share the compiled MPC-based aggregation program or code 401, 501 of each cluster (or the compiled MPC code 208, if there are no clusters). The compiled MPC-based aggregation code 208 (or 401, 501) is needed for the confidential and private aggregation of the models locally trained by each participating data owner 102, 104, 105, 107 to build a global model (or a global model per cluster). This process is repeated for all existing clusters, if there are several ones. The secure sharing of compiled MPC code among the data owners belonging to a same cluster is detailed next referring to Figures 4 and 5, which relate to a particular embodiment in which two clusters have been created: a first cluster comprising data owners 102 and 107 (Figure 4); and a second cluster comprising data owners 104 and 105 (Figure 5). Any other number of clusters and any other combination of data owners within each cluster is alternatively possible. In other words, the embodiments shown in Figures 4 and 5 are merely exemplary possibilities among any other possible combination of data owners and clusters. The compiled MPC program (in the embodiment of Figures 4 and 5, associated to each cluster) is shared only with the data owners belonging to the corresponding cluster.

Referring now in detail to Figure 4, a process 400 for secure sharing a compiled MPC program 401 among the data owners of a cluster (in this example, Cluster 1) is disclosed. The algorithm provider 101 has a compiled MPC program (compiled MPC-based aggregation program or code) 401 for Cluster 1. The compiled MPC program 401 can then be securely shared between the algorithm provider 101 and the data owners 102 and 107 belonging to Cluster 1. The compiled MPC program 401 is shared using a secure sharing system based on the secure sharing of repositories, similar to the one already disclosed with reference to Figure 3, based on the blockchain network 150 and on the storage peer-to-peer network 190. The process to be followed to share the compiled MPC program 401 among the data owners of Cluster 1 is as follows (see Figure 4):
First, a symmetric key, with which the compiled MPC program 401 to be shared with data owners 102, 107 will be cyphered, is generated. This is done at stage 402 (generate_MPC_symmetric_key). This symmetric key can be the same symmetric key used for the algorithm or model to be trained (stage 302 in Figure 3) or a different one. Next, the compiled MPC program 401 is cyphered (encrypted) with the generated symmetric key. This means that only those who know the symmetric key will be able to decrypt it. This is done at stage 403 (encrypt (MPC_program_cluser_1, MPC_symmetric_key)). Then, at stage 404, the encrypted compiled MPC program is stored in the storage peer-to-peer network 190 (save (encrypted_MPC_program_cluster_1)). Storing the encrypted compiled MPC program in the storage peer-to-peer network 190 implies a decentralized, more secure, storing of the program. Next, at stage 405, the storage peer-to-peer network 190 sends the algorithm provider 101 the hash with which the stored encrypted MPC compiled program for Cluster 1 can be accessed (data_saved (IPFS_hash_encrypted_ MPC_program_cluster_1).

Now, the symmetric key must be shared with the participating data owners 102, 107, so that they can decipher the MPC compiled program. To do so, the symmetric key is encrypted, for example with a shared secret protocol (for example, ECIES) associated to each participating data owner 102 and 107. Each shared secret protocol (for example, ECIES) (one per data owner) is obtained from, or is associated to, the public key of the data owner to be authorized, which has been obtained in the information received from each participant at stage 204. The symmetric key can only be decrypted with a shared secret protocol (for example, ECIES) associated to the private key of each data owner 102 and 107. This means that only that specific data owner will be able to decrypt it. In Figure 4, stage 406 represents the encryption of the symmetric key for the MPC compiled program with the ECIES of data owner 102 (encrypt (MPC_symmetric_key, ECIES_data_owner_102)). The shared secret protocol used to encrypt / decrypt this symmetric key can the same one as, or a different one from, the shared secret protocol used to encrypt / decrypt the symmetric key generated for the algorithm or model (Figure 3). Similarly, stage 414 represents the encryption of the symmetric key for the MPC compiled program with the ECIES of data owner 107.

Stages 407-413 refer to the secure sharing of the MPC compiled program for Cluster 1 with data owner 102. Similar stages 415-421 are used for securely sharing of the MPC compiled program for Cluster 1 with data owner 107. Referring now to stages 407-413, first the hash of the storage peer-to-peer network 190 with which the stored encrypted MPC compiled program can be accessed and the symmetric key cyphered with the shared secret ECIES associated to the private key of data owner 102, are sent to the secure access management smart contract 260). This is done at stage 407 (save_key (IPFS_hash_encrypted_MPC_program_cluster_1, ECIES_MPC_program_cluster_1 _symmetric_key _data_owner_102)). In reply to this stage 407, the blockchain network 150 automatically generates an event 408 which is sent to data owner 102. This event 408 comprises the storage peer-to-peer network hash to access the stored MPC program and the symmetric key encrypted with shared secret ECIES associated with the participating data owner 102. This event 408 is for example: data_available (IPFS_hash_encrypted_ MPC_program_cluster_1, ECIES_ MPC_program_cluster_1_symmetric_key_data_owner _102). With the hash of the storage peer-to-peer network 190, the data owner 102 can access the cyphered MPC program at the storage peer-to-peer network 190, as shown at stage 409: obtained_encrypted_MPC_program_cluster_1 (IPFS_hash_encrypted_MPC_program_ cluster_1). In reply to this call (stage 409), the storage peer-to-peer network 190 sends (stage 410) the encrypted MPC program to data owner 102 (encrypted_MPC_program_cluster_1). Then, the data owner 102 applies the reverse shared secret protocol (for example, ECIES) with its private key to the symmetric key encrypted with the shared secret protocol (for example ECIES), so that it obtains the symmetric key. This is shown at stage 411: decrypt (ECIES_ MPC_program_cluster_1_symmetric _key_data_owner_102). With the symmetric key, the data owner 102 can decrypt the encrypted MPC program, as shown at stage 412: decrypt (encrypted_ MPC_program_ cluster_1, MPC_program_cluster_1_symmetric_key). The MPC compiled program for Cluster 1 has been correctly and securely shared with data owner 102 (stage 413).

As explained, this process (stages 407-413) is repeated for each data owner belonging to Cluster 1 (in this case, only for data owner 107 at stages 415-421), until the MPC compiled program for Cluster 1 has been correctly and securely shared with all of them.

A similar process 500 for secure sharing a compiled MPC program 501 among the data owners of another cluster (in this example, Cluster 2) is shown in Figure 5 using stages 501-521. In this case, Cluster 2 is formed by two data owners 104, 105. The process is the same as the one disclosed with reference to Figure 4. Therefore, its detail description is omitted for the sake of conciseness.

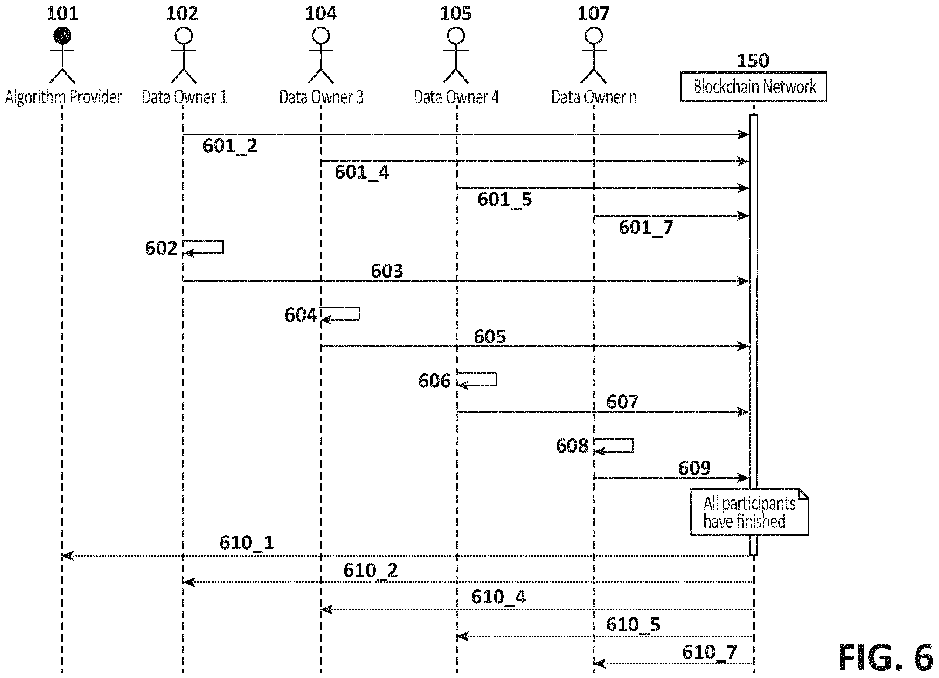

Once each data owner 102, 104, 105 and 107 has the model to train, they can start training the model locally (FML, federated model learning). This is explained in Figure 6. To do so, and to be able to follow the traceability of the training in the blockchain network 150, each data owner sends a training start notification (train_start_notification) (stages 601_2, 601_4, 601_5, 601_7) and performs its local training with its own dataset on the model that has been previously shared with them by the algorithm provider 101. The local training (execution thereof) is shown at stages 602 (for data owner 102), 604 (for data owner 104), 606 (for data owner 105) and 608 (for data owner 107). The local training event may be as follows: local_training (model). When they finish their local training, each data owner sends a notification to the training management provider 160 (stage 603 for data owner 102, stage 605 for data owner 104, stage 607 for data owner 105 and stage 609 for data owner 107), which will be waiting until all the participants have finished (or, alternatively, a timeout and training failure event can be defined, for example). The notification may be as follows: train_end_notification. When the training management provider 160 receives from all participating data owners the notification indicating that each local training has finished notification, the training management provider 160 sends an event (events 610_1, 610_2, 610_4, 610_5, 610_7) to all participating data owners and to the algorithm provider 101 requesting them to start aggregating their training results. This notification may be as follows: start_MPC_aggregation.

Once the event 610_1, 610_2, 610_4, 610_5, 610_7 sent from the training management provider 160 indicating that the aggregation of the local training results can start, each participating data owner 102, 104, 105, 107 and the algorithm provider itself 101 can execute the compiled MPC-based aggregation code associated with the cluster they belong to (they had already received the compiled MPC program) securely from the algorithm provider 101 as described according to Figures 4 and 5). Or, in a general situation in which no clusters have been created, the participating data owners and the algorithm provider execute the single compiled MPC-based aggregation program or code. When the participating data owners 102, 104, 105, 107 and the algorithm provider 101 execute the compiled multi-party computation code, a peer-to-peer network 200 between them is generated. In order to execute the compiled MPC-based aggregation code, the previously trained local model (stages 602, 604, 606, 608) is required.

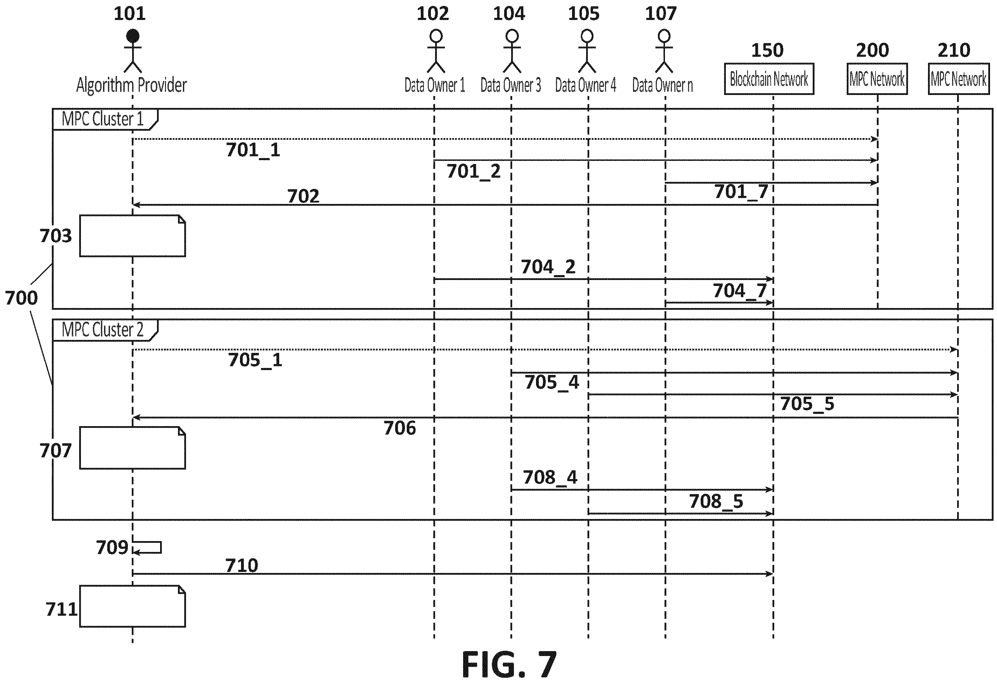

The particular case with several clusters is shown in Figure 7, which shows the stages of aggregation of training data (previously trained local models) of the data owners belonging to cluster 1 (Figure 7, up) and the stage of aggregation of training data (previously trained local models) of the data owners belonging to cluster 2 (Figure 7, down). For cluster 1, when the algorithm provider 101 and all the data owners (in this case, data owners 102 and 107) execute the respective aggregation execution (events 701_1, 701_2, 701_7 in Figure 7, which can take the form: aggregate (MPC_program_compile_cluster_1)), a multi-party p2p (peer-to-peer) network 200 is generated for the cluster, in such a way that the local models (algorithms) resulting from the training performed by each data owner (Figure 6) and the local model 120 the algorithm provider 101 already had (if it had one) are all aggregated to form or build an improved or optimized model (algorithm) per cluster. As explained, the results of the local trainings are not shared. The aggregation occurs when all participating data owners (or all participating data owners per cluster) and the algorithm provider 101 execute the compiled MPC-based aggregation code. An input for each execution is the previously trained local model.

The aggregation is made at the peer-to-peer network 200. Then, the algorithm provider 101 receives (stage 702) the aggregation result (the aggregated model for cluster 1) from the MPC network 200 (aggregated_model_cluster_1). In principle, this optimized model for cluster 1 is only known by the algorithm provider 11. In this process, all local information of the data owners 102 107 (datasets and trained model) remains private and confidential to others. Optionally, if desired (or necessary) all (or only some) data owners participating in the cluster could also be informed of the result of the optimized model 703; but, in principle, as a general rule, only the algorithm provider 101 (which initiated the training) is aware of the optimized model 703. An aggregated model 703 for cluster 1 (optimized algorithm) is thus obtained at the algorithm provider 101. When all the aggregation processes of cluster 1 are finished, the data owners participating in cluster 1 send the training management provider 160 a call (stages 704_2, 704_7) indicating that the aggregation has finished (aggregation_finished).

A similar process occurs for all other clusters. In Figure 7 (down), the aggregation of training data of the data owners belonging to cluster 2 (data owners 104 and 105) is illustrated following stages 705_1, 705_4, 705_5, 706, 707, 708_4, 708_5. The algorithm provider 101 executes the compiled MPC programs of all clusters (Cluster 1, Cluster 2) because it belongs to all clusters.

Then, if there are clusters, at the algorithm provider 101 a fusion execution occurs (stage 709), in which all the aggregated models (one per cluster, in this case, two aggregated models) are merged into a single model. Stage 709 is for example: fusion (aggregated_model_cluster_1, aggregated_model_cluster_2). The algorithm provider 101 then sends the training management provider 160 an indication (stage 710) indicating that the training has finished. Stage 710 is for example: training_finished. The management of the training is thus finished. An aggregated model (optimized algorithm) 711 has thus been obtained at the algorithm provider 101. It is remarked that, if there are no clusters, the algorithm provider 101 receives the aggregated model (optimized algorithm) 711, because the optimized algorithm is directly obtained from the aggregation when the MPC-based code is executed. If, however, there are clusters, the algorithm provider 101 generates the aggregated model (optimized algorithm) 711, because the algorithm provider 101 merges the models aggregated from each cluster, so that an optimized algorithm is obtained. The aggregated model 711 is preferably received by the algorithm provider 101.

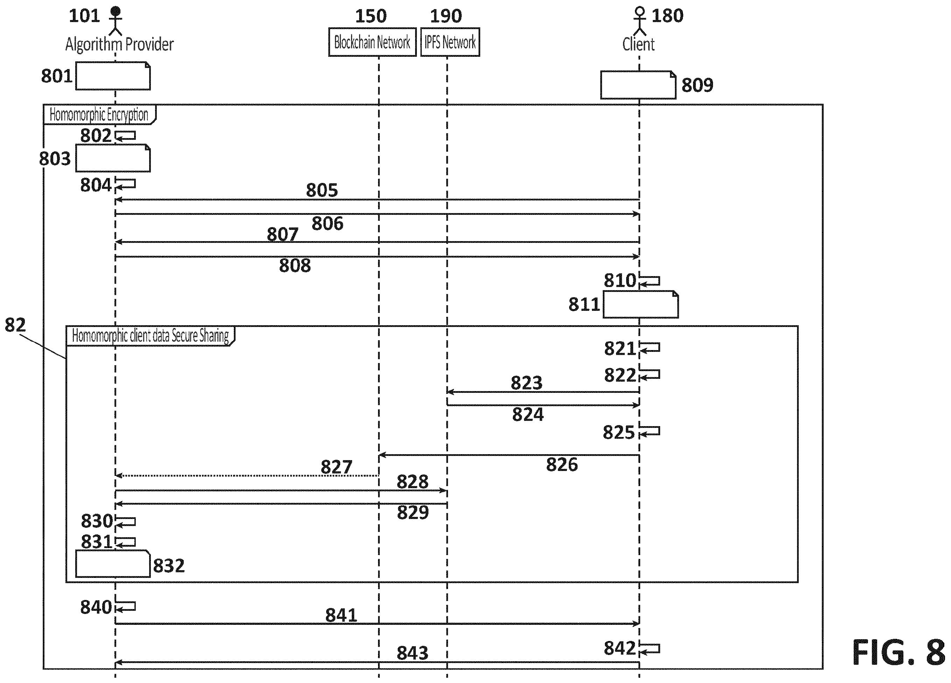

So far, the algorithm provider 101 already knows the optimized model 711 obtained from the aggregation of local models. Therefore, the algorithm provider 101 can offer a service based on this algorithm (optimized model 711) to its customers. This is for example illustrated in Figure 8, in which a client or customer 180 is shown in addition to the algorithm provider 101. Let's consider that client 180 has their own data on which he/she wants to receive a service from the algorithm provider 101. In other words, client 180 would like, based on its own data, to obtain a prediction. For example, the service requested by client 180 could be one of: detection of a potential illness in medical measurements (e.g. images, blood samples, etc.); decision-making of a central unit of an autonomous vehicle; control of an electric device or machine, including predictive maintenance, product improvement, failure detection or prevention and quality inspections; control of a production line; control of a factory; facial/voice recognition; virtual assistants; vehicle fleet coordination; energy consumption prediction; detection of fraudulent bank and credit card transactions; and credit-scoring for insurance and loans.

However, neither the client 180 wants to disclose its own data to the algorithm provider 101 (the client 180 wants to keep its data private) nor the algorithm provider 101 wants to disclose its (previously optimized) algorithm 711 to the client 180. So, a method for providing a service based on the optimized model obtained in the previous method, is performed. To achieve two-way confidentiality, homomorphic encryption is proposed, which allows operations to be performed on encrypted data (they are kept confidential) with the same result as if operations were performed on unencrypted data.

To do this, the optimized algorithm 711 obtained following the previous disclosure (or, in a more general way according to additional aspects of the disclosure that do not fall within the scope of the appended claims, any algorithm 801 on which an algorithm provider 101 may wish to provide service, because a starting situation could be one in which a service is provided without having previously optimized the algorithm on which it is based) is recoded (stage 802) in a homomorphic plane (to be able to operate homomorphically encrypted data) by the algorithm provider 101. The recoding event 802 is for example: recode_to_homomorphic_plane (aggregated model). Thus, an algorithm recoded to homomorphic plane 803 has been obtained.

The recoded algorithm 803 is then registered together with its functional features of interest (for example through SecuExec, which is a secure execution service that allows issuing single-use execution authorizations), as an algorithm offered by the algorithm provider 101 (this is done at stage 804, which is for example: algorithm_register). Registration of the algorithms to be offered to clients (which are for example offered as REST services) is required at the algorithm provider 101 so that clients can be aware of their features and can learn how to execute them. For example, the service used to register the algorithm as REST service is SecuExec. SecuExec will then enable the control of the authorized execution of the provided algorithm. To do so, SecuExec will indicate during the registration, together with the algorithm identifier and the algorithm features (for example, type of input data), different characteristics related to, for example, how to interact with the algorithm. In the case of the REST service, these will be characteristics related to the REST method (put, get, post...), the input (url), and the communication protocol (https, https, websocket, etc.) supported. The registered recoded algorithm can then be offered as a REST service. To control access to the execution of the algorithm, an authorization module (for example SecuExec) is included in the algorithm provider. The authorization module can generate single-use execution authorization tokens for potential clients. The correct authorization of the clients will be validated by the REST service itself that offers the algorithm.

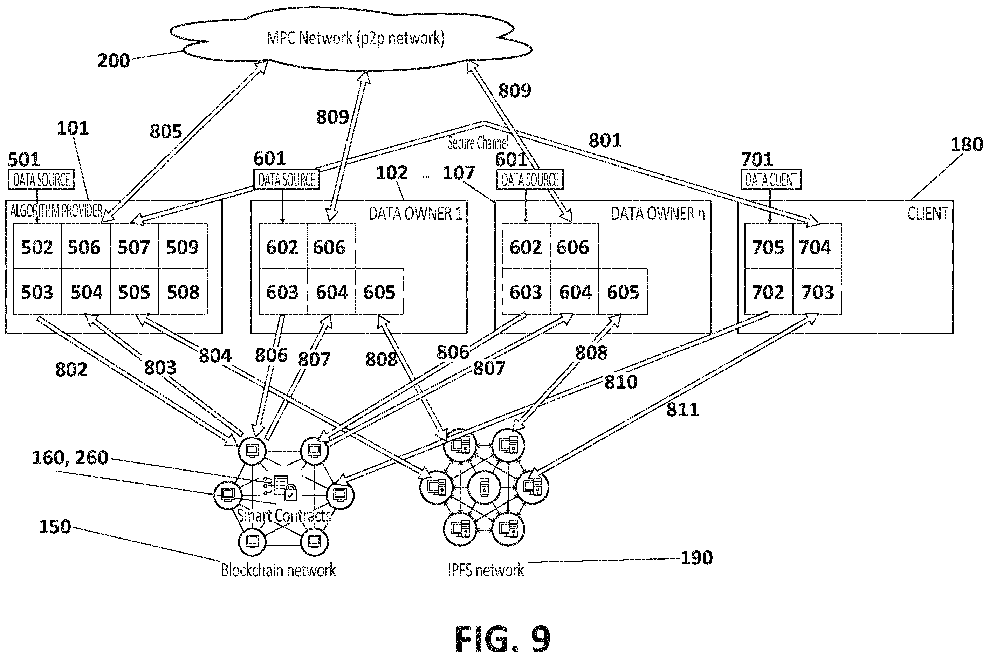

When a client 180 wants to receive a service, it makes a direct request (stage 805) to the algorithm provider 101. In other words, the user client 180 sends a service request indicating the particular service requested. By direct request, it is meant that it is not necessary to leave traceability through the blockchain network 150, for example, since the request is made on a point-to-point communication (see for example channel 801 in Figure 9) between the client 180 and the algorithm provider 101, so this communication is considered a secure communication channel between them. In the shown embodiment, the secure communication channel refers to WalletConnect (stage 805). At this stage 805, the client 180 asks the algorithm provider 101 for the list of algorithms it has available. Stage 805 can for example be: walletConnect (algorithm_discovery). Then, at stage 806 the algorithm provider 101 returns the list of available algorithms (for example: walletConnect (algorithm_list)). Based on this list, the client 180 indicates the algorithm provider 101 the service he wishes to receive (if any). This is done at stage 807, which can be for example: walletConnect (execution_request, algorithm_id, service_features). In this case, the client 180 has selected the service identified as "algorithm_id". Next, the algorithm provider 101 confirms that it can provide the service. This is done at stage 808, which can be for example: walletConnect (execution_confirm).

The service needs to be provided in a confidential way (homomorphic). In order to provide the service, the algorithm provider 101 needs the client 180's data (client_data 809). The data of the client 180 is any data suitable for the algorithm that the client 180 has and on which he/she wants to execute an algorithm owned by the algorithm provider 101. Regarding suitable data, it is remarked that the type of input data is an example of algorithm features provided during registration (stage 803) of the recoded algorithm.

As mentioned above, the client 180 can encrypt the data homomorphically with its homomorphic public key, so that the algorithm provider 101 can operate it without decrypting it (and therefore without knowing its contents). This is done at stage 810, for example: homomorphic_encryption (Client_data, homomorphic_public_key). As a result, the client 180 has its data homomorphically encrypted 811. Once encrypted, that data 811 is shared with the algorithm provider 101 using the same system and protocol as previously described (for example in Figure 3, for sharing the training mode). In other words, the user client 180 sends the algorithm provider 101 user client data homomorphically encrypted with a user data homomorphic public key. This is generally represented at block 82 in Figure 8, until the homomorphic_data_client has been correctly and securely shared 832:
stage 821 (generate_homomorphic_client_data_symetric_key);
stage 822 (encrypt (homomorphic_client_data, homomorphic_client_data_symetric _key);
stage 823 (save (encrypted_homomorphic_client_data));
stage 824 data_saved (IPFS_hash_ encrypted_homomorphic_client_data));
stage 825 (encrypt (homomorphic_client_data_symetric_key, ECIES_algorithm_ provider);
stage 826 (save_key (IPFS_hash_ encrypted_homomorphic_client_data, ECIES_ homomorphic_client_data_symetric_key_algorithm_provider));
stage 827 (data_available (IPFS_hash_ encrypted_homomorphic_client_data, ECIES_ homomorphic_client_data_symetric_key_algorithm_provider));
stage 828 (obtain_ encrypted_homomorphic_client_data (IPFS_hash_ encrypted_ homomorphic_client_data));
stage 829 (encrypted_homomorphic_client_data);
stage 830 (decrypt (ECIES_ homomorphic_client_data_symetric_key_ algorithm_provider));
stage 831 (decrypt (encrypted_homomorphic_client_data, homomorphic_client_data_ symetric_key)).

Alternatively, the direct connection between client 180 and algorithm provider 101 could be used for data sharing, but as potentially a large amount of data will be involved, the repository-based solution is preferably implemented.

Once the data (homomorphic_data_client) 832 has been correctly and securely shared with the algorithm provider 101, the algorithm provider 101 checks the authorization, verifies the data and applies its algorithm on the homomorphic plane until it obtains a result (which will also be homomorphically encrypted, and therefore unknown to the algorithm provider 101). In other words, the algorithm provider 101 applies the homomorphically encrypted user client data to the homomorphically recoded optimized model. This is done at stage 840, for example: authorize_verify_execute (homomorphic_aggregatred _model, homomorphic_client_data).

The algorithm provider 101 shares the result, for example through the direct connection with the client 180 (in this case it may most probably not be necessary to use the secure repository solution since there will not be, in principle, a large amount of data). In other words, the algorithm provider 101 sends the homomorphically encrypted results of the application of the homomorphically encrypted user client data to the homomorphically recoded optimized model to the user client 180. This is done at stage 841, for example: walletConnect (homomorphic_execution_result).

The client 180 receives the result, decrypts it with its homomorphic private key and obtains the result of the execution of the algorithm from the algorithm provider 101 on its own data. In other words, the user client 180 decrypts the homomorphically encrypted results with its homomorphic secret key. This is done at stage 842, for example: homomorphic_decryption (homomorphic_execution_result, homomorphic_private_key). Then, the client 180 indicates to the algorithm provider 801, for example via the direct communication channel, that the process has been completed. This is done at stage 843, for example: walletConnect (execution_finished).

Figure 9 schematically shows a possible architecture to perform the former processes. The proposed architecture is based on Docker services. The main elements or entities involved in the processes, are: the algorithm provider 101; the data owners 102-107 (of which only two entities are shown); and the client 180. There is also the blockchain network 150, which implements the smart contracts (training management provider 160 and secure access management provider 260); and the storage peer-to-peer network (IPFS network) 190. The blockchain network 150 and the IPFS network 190 are conventional and are out of the scope of the present invention. Besides, every time an aggregation process occurs, a peer-to-peer network 200, specifically a MPC network, is created. For simplicity, a single peer-to-peer network 200 is illustrated. The blockchain network 150, storage peer-to-peer network 190 and MPC network 200 are distributed networks. The data owners, the client and the services offered by the algorithm provider are dockers that may be deployed in one or more processing systems of the respective actors. The specific deployment of them is out of the scope of the present invention. Depending on the role played by each entity, the algorithm provider 101, the data owners 102-107 and the client 180 may require certain modules (that may be software modules) for providing minimum services.

For example, the algorithm provider 101 may have: -A module 502 for training, in order to perform its own local training, if required, with its own source data or dataset 501. Module 502 may use an artificial intelligence (AI) model for training the dataset. -A module 503 implementing a blockchain client, for interacting with the blockchain network 150. This interaction is represented with arrow 802. Module 503 may be involved in the creation of a training campaign and in the secure sharing of algorithms or models, compiled MPC program and homomorphic data from the client. -A module 504 for listening to blockchain events. This is represented with arrow 803. Module 504 listens to events automatically generated by the smart contracts 160, 260 implemented in the blockchain network 150. -A module 505 for IPFS client. This module permits to store information (such as models and/or compiled MPC programs) and collect information (such as homomorphic data from clients) into/from the IPFS network 190. The interaction between module 505 and the IPFS network 190 is represented with arrow 804. -A module 506 implementing an MPC application (app). This app performs the execution of a compiled MPC program, so that the algorithm provider 101 can take part in the aggregation of the algorithm or model and can receive the result of the aggregated (improved) algorithm or model. Module 506 interacts with the MPC network 200. This interaction is represented with arrow 805. -A module 507 for establishing direct communication channels (secure channels) with the client 180. For example, the protocol WalletConnect can be used to manage and orchestrate the exchange of messages required to establish a secure channel between two ends. Arrow 801 represents a secure channel established between the algorithm provider 101 and the client 180. -A module 508 for securely registering and authorizing the execution of the algorithms. -A module 509 for homomorphic encryption. It permits to execute algorithms on/with data belonging to the client 180 in a homomorphic plane. It may be offered as a REST service.

For example, the data owners 102-107 may have: -A module 602 for training, in order to perform its own local training of the algorithm or model shared by the algorithm provider 101, with its own source data or dataset 601. This local training may be based on artificial intelligence (AI). -A module 603 implementing a blockchain client, for interacting with the blockchain network 150. This interaction is represented with arrow 806. Module 603 may be involved in a training campaign and in the secure sharing of algorithms or models and compiled MPC program. -A module 604 for listening to blockchain events. This is represented with arrow 807. Module 604 listens to events automatically generated by the smart contracts 160, 260 implemented in the blockchain network 150. -A module 605 for IPFS client. This module permits to collect information (such as models and/or compiled MPC programs) from the IPFS network 190. The interaction between module 605 and the IPFS network 190 is represented with arrow 808. -A module 606 implementing an MPC application (app). This app permits the execution of a compiled MPC program, so that the data owner 102-107 can take part in the aggregation (improvement) of the algorithm or model. Module 606 interacts with the peer-to-peer network 200. This interaction is represented with arrow 809.

For example, the client 180 may have: -A module 701 implementing a blockchain client, for interacting with the blockchain network 150. This interaction is represented with arrow 810. Module 701 may be involved in the secure sharing of the homomorphic data from the client 180. -A module 702 for IPFS client. This module permits to store information (such as homomorphic data from the client 180) into the IPFS network 190. The interaction between module 702 and the IPFS network 190 is represented with arrow 811. -A module 703 for establishing direct communication channels (secure channels) with the algorithm provider 101. A secure channel is represented with arrow 81. -A module 704 for homomorphic encryption. It cyphers the data (dataset) 701 of the client 180 and deciphers the result of the service provided by the algorithm provider 101, that is to say, the application of the improved model to the dataset 701 of the client 180.

The proposed methods for training algorithms and for providing a service based on the optimized model obtained in the method for training algorithms have been applied in different examples referring to different technical fields:

### EXAMPLE 1

The method of the invention has been used to classify whether a machine is at risk of failure or not (variable Y) taking into account different explanatory variables X1, X2, X3 (rotational speed, torque and tool wear) that are collected from the machine. The machine learning algorithms used to do the classification are Perceptron and SVM (supervised learning prediction algorithms). An algorithm provider had an Perceptron and SVM algorithms configured for classifying the risk of failure of a machine. Let's consider the process for the Perceptron algorithm (the process was the same for the SVM algorithm). The algorithm has been trained as follows: 50 data owners have subscribed at a training management provider deployed in a blockchain network. This way, traceability was guaranteed and non-repudiation was avoided. The algorithm provider has sent a training request including a training manifest, which includes the following execution features and minimum requirements: kind of training: Perceptron; type of data: rotational speed, torque and tool wear of an industrial machine; minimum amount of data: 100; minimum number of participants: 10. 38 of the 50 data owners accepted to participate. The algorithm provider created a compiled MPC code including the IP addresses of the participating data owners, their certificates and the amount of data (at least 100) with which they were going to participate. The algorithm provider sent each participating data owner the MPC code and the Perceptron algorithm to be trained using a secure sharing system which enabled the sharing solely with the specific participating data owner. The data owners locally trained the algorithm with at least 100 datasets. This way, each participating data owner created a local model. The data owners and algorithm provider then executed the compiled MPC code and generated an MPC network. At this network, an optimized Perceptron model was generated and provided to the algorithm provider without disclosing any private information as participants did not share their locally trained models. Once the algorithm was trained, the algorithm provider registered it with its characteristics (Perceptron algorithm, specific REST service, rotational speed, torque and tool wear) so that it could be used to serve potential clients.

A company was interested in analysing the risk of failure of their industrial machines, for which it has contacted the algorithm provider to assess if the algorithm provider may have a suitable algorithm. The algorithm provider informed the company about the Perceptron algorithm which requires rotational speed, torque and tool wear variables for its execution. This algorithm seemed to fit the client's needs. The company had a dataset comprising, among others, data about the required variables of the machines: rotational speed, torque and tool wear. The algorithm provider recoded the optimized Perceptron model in a homomorphic plane. The company homomorphically encrypted its dataset with a homomorphic public key and sent the encrypted data to the algorithm provider, which applied the encrypted data to the homomorphically recoded algorithm. The algorithm provider then sent the results to the company, which decrypted it with its homomorphic secret key. The results enabled the client to know the risk of failure for its industrial machines. In this way, both the algorithm provider and the client have operated privately without sharing their private information (client data and algorithm provider algorithm).

The following additional examples have been carried out following a similar process, which is summarized next for conciseness.

### EXAMPLE 2

It has been measured whether there is a linear correlation between the minimum and maximum temperature of a machine on the same day. Considering X to be the minimum temperature and Y the maximum temperature, the statistics used are: Covariance between X and Y, Pearson correlation index between X and Y, Linear Regression Algorithm to obtain the coefficients of the linear regression line.

### EXAMPLE 3

The method of the invention has been used to predict the risk of coronary heart disease 10 years from now based on 5 measurements (age, cigarettes smoked per day, cholesterol, heart rate, blood glucose level) taken from a patient. The following classifiers have been used to make this prediction: Logistic regression, Perceptron and SVM.

### EXAMPLE 4

The method of the invention has been used to predict the risk of chronic kidney disease based on 24 measurements (age, blood pressure, specific gravity, albumin, sugar, red blood cells, pus cell, pus cell clumps, bacteria, blood glucose random, blood urea, serum creatinine, sodium, potassium, hemoglobin, packed cell volume, white blood cell count, red blood cell count, hypertension, diabetes mellitus, coronary artery disease, appetite, pedal edema, anemia) taken from a patient. The following classifiers have been used to make this prediction: Logistic regression, decision tree, Random Forest, Perceptron and SVM.

### EXAMPLE 5

The method of the invention has been used to predict the specific room inside a building in which a smartphone is located based on the intensity measurements of seven different WIFI signals read by the smartphone. The following classifiers have been used to make this prediction: Logistic regression, decision tree, Random Forest, Perceptron and SVM.

### EXAMPLE 6

The method of the invention has been used to predict the energy rating of different buildings built with different characteristics, e.g. more or less glazed surface or one orientation or another, based on two numerical variables: the heating and cooling cost of the building. The following classifiers have been used to make this prediction: Logistic regression, Random Forest, Perceptron and SVM.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A computer implemented method for training algorithms, the method being implemented in a plurality of processing devices and comprising the steps of:
providing at least one data owner (102-207) having datasets, at least one algorithm provider (101) having algorithms to be trained and a blockchain network (150) in which a training management provider (160) is deployed, wherein the training management provider (160) is a smart contract that is automatically executed when it is interacted with, and wherein each of: the at least one data owner (102-207), the at least one algorithm provider (101) and the blockchain network (150), include one or more processing devices;
sending, by the at least one algorithm provider (101), a training request (201) to the training management provider (160), the training request (201) including a training manifest that determines execution features of a training of the algorithm to be trained and minimum requirements to be met by the training;
sending (202_2 - 202_7), by the training management provider (160), the training manifest to the at least one data owner (102-207);
sending (203_2, 203_4, 203_5, 203_7), by each data owner (102, 104, 105, 107) willing to participating in training the algorithm, an acceptance to the training management provider (160), the acceptance including an acceptance manifest comprising means ensuring the identity of the participating data owner;
sending (204), by the training management provider (160) and once the minimum requirements have been met, the acceptance manifests to the algorithm provider (101);
generating, by the algorithm provider (101), a compiled multi-party computation code (208) based on the received acceptance manifests;
sending (300), by the algorithm provider (101), the algorithm to be trained and the compiled multi-party computation code (208) to the at least one data owner (102, 104, 105, 107) participating in training the algorithm;
training (602, 604, 606, 608), by each participating data owner (102, 104, 105, 107), the received algorithm with its corresponding datasets creating a local model;
executing (701_1, 701_2, 701_7, 705_1, 705_4, 705_5), by the participating data owners (102, 104, 105, 107) and the algorithm provider (101), the compiled multi-party computation code generating a multi-party peer-to-peer network (200) between them; and
generating by means of the multi-party peer-to-peer network (200), a model (711) based on the local models and the algorithm to be trained.

2. The computer implemented method according to claim 1, wherein when the algorithm to be trained has been previously trained, the step of generating the model (711) comprises optimizing the model by aggregating the local models and the algorithm to be trained.

3. The computer implemented method according to any one of the preceding claims, wherein the acceptance manifest comprises an IP address of the participating data owner, a data owner certificate and optionally a public key of the participating data owner.

4. The computer implemented method according to any one of the preceding claims, wherein the acceptance manifest comprises an amount of data to be used to train the algorithm.

5. The computer implemented method according to any one of the preceding claims, comprising prior to sending the training request (201) by the algorithm provider (101), sending, by the data owners (102-107) and the algorithm provider (101), a subscription request (170_1 - 170_7) to the training management provider (160).

6. The computer implemented method according to any one of the preceding claims, wherein the step of sending (300) the algorithm to the data owners comprises the steps of:
generating (302), by the algorithm provider (101), a first symmetric key for the algorithm to be trained;
encrypting (303), by the algorithm provider (101), the algorithm with the first symmetric key;
storing (304), by the algorithm provider (101), the coded algorithm in a distributed file system deployed in a storage peer-to-peer network (190);
sending (305), by the distributed file system, a first hash code to the algorithm provider (101) indicating the location of the coded algorithm;
coding (306), by the algorithm provider (101), the first symmetric key with a shared secrete protocol, wherein the coded symmetric key for each data owner is associated to a public key of the respective data owner;
sending, by the algorithm provider (101), the first hash code and the corresponding coded symmetric key for each data owner to the training management provider (160);
sending, by the training management provider (160), a first access event (308, 316) to each data owner participating in training the algorithm, the first access event (308, 316) comprising the first hash code and the corresponding coded first symmetric key associated to the data owner;
accessing (309, 317), by the data owners, to the coded algorithm in the distributed file system with the first hash code;
applying (311, 319), by the data owners, a first inverse shared secrete protocol with a respective first private key to obtain the first symmetric key; and
decoding (312, 320), by the data owners, the coded algorithm with the first symmetric key to obtain the algorithm to be trained.

7. The computer implemented method according to claim 6, wherein the distributed file system is an Interplanetary File system.

8. The computer implemented method according to any one of claims 6 to 7, wherein the step of sending (300) the compiled multi-party computation code (208) to the data owners comprises:
generating (402), by the algorithm provider (101), a second symmetric key for the algorithm to be trained;
encrypting (403), by the algorithm provider (101), the compiled multi-party computation code (208) with the second symmetric key;
storing (404), by the algorithm provider, the encrypted compiled multi-party computation code in the distributed file system;
sending (405), by the distributed file system, a second hash code to the algorithm provider (101) indicating the location of the encrypted compiled multi-party computation code;
encrypting (406), by the algorithm provider (101), the second symmetric key with a respective second shared secret protocol associated to each data owner participating in training the algorithm, each second shared secret protocol being associated to the public key of the corresponding data owner;
sending (407, 415), by the algorithm provider (101), the second hash code and the encrypted second symmetric keys to the training management provider (160);
sending, by the training management provider (160), a second access event (408, 416) to each data owner participating in training the algorithm, the second access event comprising the second hash code and the corresponding encrypted second symmetric key associated to the data owner;
accessing (409, 417), by the data owners, to the encrypted compiled multi-party computation code in the distributed file system (190) with the second hash code;
applying (410, 418), by the data owners, a second inverse shared secret protocol with a respective second private key to obtain the second symmetric key; and
decoding, by the data owners, the encrypted compiled multi-party computation code with the second symmetric key to obtain the compiled multi-party computation code (412).

9. The computer implemented method according to any one of the preceding claims, wherein the step of training (602, 604, 606, 608), by each data owner, the algorithm with its corresponding dataset, comprises:
sending, by each data owner participating in the training, a start training notification (601_2, 601_4, 601_5, 601_7) to the training management provider (160), the start training notification indicating the beginning of the training of the algorithm; and
sending, by each data owner participating in the training, a finish training notification (603, 605, 607, 609) to the training management provider (160), the finish training notification indicating the completion of the training of the algorithm.

10. The computer implemented method according to any one of the preceding claims, wherein the execution features of the training are selected form a group comprising: a kind of training, a kind of data from the datasets, a minimum amount of data from each dataset and any combination thereof.

11. The computer implemented method according to any one of the preceding claims, wherein the minimum requirements to be met by the training are selected from a group comprising: a minimum number of data owners participating in the training, a particular list of data owners required to participate in the training, a maximum waiting time to reach the data owners to participate in the training and any combination thereof.

12. The computer implemented method according to any one of the preceding claims, wherein the algorithm to be trained is configured to at least one of the following:
determine whether a potential anomaly exists in the operation of an apparatus or system, or in the behaviour of a process; or determine a configuration of an apparatus or system intended to improve the operation and/or solve a potential anomaly thereof;
determine whether a potential anomaly or illness exists in a human or animal body part.

13. A computer implemented method for providing a service based on an optimized model, the method comprising:
generating the optimized model by performing a method according to any one of the preceding claims;
recoding (802), by the algorithm provider (101), the optimized model in a homomorphic plane, to obtain a recoded algorithm (803);
sending (805), by a user client (180), a service request indicating the particular service requested;
sending (82), by the user client (180), user client data homomorphically encrypted with a user data homomorphic public key to the algorithm provider (101);
applying (840), by the algorithm provider, the homomorphically encrypted user client data to the homomorphically recoded optimized model;
sending (841), by the algorithm provider, the homomorphically encrypted results of the application of the homomorphically encrypted user client data to the homomorphically recoded optimized model to the user client;
decrypting (842), by the user client, the homomorphically encrypted results with its homomorphic secret key.

14. The computer implemented method according to claim 13, further comprising, prior to sending (805), by a user client (180), a service request indicating the particular service requested: registering (804) the recoded algorithm (803) together with its functional features of interest as an algorithm offered by the algorithm provider (101).

15. The computer implemented method of either claim 13 or 14, wherein the service comprises: either
solving a problem requiring classification of user client data or prediction based on user client data, the problem defining either a configuration or operation of an apparatus or system, or behaviour of a process; and
determining at least one of the following, based on the solution to the problem:
whether a potential anomaly exists in the operation of the apparatus or the system, or in the behaviour of a process; and
a configuration of the apparatus or the system intended to improve the operation and/or solve the potential anomaly thereof, or a configuration of any apparatus or system in the process intended to improve the behaviour and/or solve the potential anomaly thereof;
or
solving a problem requiring classification of user client data or prediction based on user client data, the problem defining a behaviour of a human or animal body part; and
determining, based on the solution to the problem, whether a potential anomaly exists in the behaviour of the human or animal body part.

## Patentansprüche

1. Computerimplementiertes Verfahren zum Trainieren von Algorithmen, wobei das Verfahren in einer Mehrzahl von Verarbeitungsvorrichtungen implementiert ist und die folgenden Schritte umfasst:
Bereitstellen mindestens eines Dateneigentümers (102-207), der über Datensätze verfügt, mindestens eines Algorithmenanbieters (101), der über zu trainierende Algorithmen verfügt, und ein Blockchain-Netzwerk (150), in dem ein Trainingsverwaltungsanbieter (160) bereitgestellt ist, wobei der Trainingsverwaltungsanbieter (160) ein Smart Contract ist, der automatisch ausgeführt wird, wenn mit ihm interagiert wird, und wobei der mindestens eine Dateneigentümer (102-207), der mindestens eine Algorithmenanbieter (101) und das Blockchain-Netzwerk (150) jeweils eine oder mehrere Verarbeitungsvorrichtungen umfassen;
Senden einer Trainingsanfrage (201) durch den mindestens einen Algorithmenanbieter (101) an den Trainingsverwaltungsanbieter (160), wobei die Trainingsanfrage (201) ein Trainingsmanifest enthält, das Ausführungsmerkmale eines Trainings des zu trainierenden Algorithmus und durch das Training zu erfüllende Mindestanforderungen festlegt;
Senden (202_2 - 202_7) des Trainingsmanifests durch den Trainingsverwaltungsanbieter (160) an den mindestens einen Dateneigentümer (102-207);
Senden (203_2, 203_4, 203_5, 203_7) einer Zusage durch jeden Dateneigentümer (102, 104, 105, 107), der bereit ist, am Trainieren des Algorithmus teilzunehmen, an den Trainingsverwaltungsanbieter (160), wobei die Zusage ein Zusagemanifest enthält, das Mittel umfasst, welche die Identität des teilnehmenden Dateneigentümers sicherstellen;
Senden (204) der Zusagemanifeste durch den Trainingsverwaltungsanbieter (160) an den Algorithmenanbieter (101), sobald die Mindestanforderungen erfüllt sind;
Erzeugen eines kompilierten Mehrparteienberechnungscodes (208) durch den Algorithmenanbieter (101) auf Grundlage der empfangenen Zusagemanifeste;
Senden (300) des zu trainierenden Algorithmus und des kompilierten Mehrparteienberechnungscodes (208) durch den Algorithmenanbieter (101) an den mindestens einen am Trainieren des Algorithmus teilnehmenden Dateneigentümer (102, 104, 105, 107);
Trainieren (602, 604, 606, 608) des empfangenen Algorithmus durch jeden teilnehmenden Dateneigentümer (102, 104, 105, 107) mit seinen entsprechenden Datensätzen unter Erstellen eines lokalen Modells;
Ausführen (701_1, 701_2, 701_7, 705_1, 705_4, 705_5) des kompilierten Mehrparteienberechnungscodes durch die teilnehmenden Dateneigentümer (102, 104, 105, 107) und den Algorithmenanbieter (101) unter Erzeugen eines Mehrparteien-Peer-to-Peer-Netzwerks (200) zwischen ihnen; und
Erzeugen eines Modells (711) mittels des Mehrparteien-Peer-to-Peer-Netzwerks (200) auf Grundlage der lokalen Modelle und des zu trainierenden Algorithmus.

2. Computerimplementiertes Verfahren nach Anspruch 1, wobei, wenn der zu trainierende Algorithmus zuvor trainiert worden ist, der Schritt des Erzeugens des Modells (711) ein Optimieren des Modells durch Aggregieren der lokalen Modelle und des zu trainierenden Algorithmus umfasst.

3. Computerimplementiertes Verfahren nach einem der vorhergehenden Ansprüche, wobei das Zusagemanifest eine IP-Adresse des teilnehmenden Dateneigentümers, ein Dateneigentümerzertifikat und optional einen öffentlichen Schlüssel des teilnehmenden Dateneigentümers umfasst.

4. Computerimplementiertes Verfahren nach einem der vorhergehenden Ansprüche, wobei das Zusagemanifest eine zum Trainieren des Algorithmus zu verwendende Datenmenge umfasst.

5. Computerimplementiertes Verfahren nach einem der vorhergehenden Ansprüche, umfassend, vor dem Senden der Trainingsanfrage (201) durch den Algorithmenanbieter (101), ein Senden einer Abonnementanfrage (170_1 - 170_7) durch die Dateneigentümer (102-107) und den Algorithmenanbieter (101) an den Trainingsverwaltungsanbieter (160).

6. Computerimplementiertes Verfahren nach einem der vorhergehenden Ansprüche, wobei der Schritt des Sendens (300) des Algorithmus an die Dateneigentümer die folgenden Schritte umfasst:
Erzeugen (302) eines ersten symmetrischen Schlüssels für den zu trainierenden Algorithmus durch den Algorithmenanbieter (101);
Verschlüsseln (303) des Algorithmus mit dem ersten symmetrischen Schlüssel durch den Algorithmenanbieter (101);
Speichern (304) des kodierten Algorithmus durch den Algorithmenanbieter (101) in einem verteilten Dateisystem, das in einem Speicher-Peer-to-Peer-Netzwerk (190) bereitgestellt ist;
Senden (305) eines ersten Hash-Codes durch das verteilte Dateisystem an den Algorithmenanbieter (101), wobei der erste Hash-Code den Speicherort des kodierten Algorithmus angibt;
Kodieren (306) des ersten symmetrischen Schlüssels durch den Algorithmenanbieter (101) mit einem gemeinsamen geheimen Protokoll, wobei der kodierte symmetrische Schlüssel für jeden Dateneigentümer einem öffentlichen Schlüssel des jeweiligen Dateneigentümers zugeordnet ist;
Senden des ersten Hash-Codes und des entsprechenden kodierten symmetrischen Schlüssels für jeden Dateneigentümer durch den Algorithmenanbieter (101) an den Trainingsverwaltungsanbieter (160);
Senden eines ersten Zugriffsereignisses (308, 316) durch den Trainingsverwaltungsanbieter (160) an jeden am Trainieren des Algorithmus teilnehmenden Dateneigentümer, wobei das erste Zugriffsereignis (308, 316) den ersten Hash-Code und den entsprechenden, dem Dateneigentümer zugeordneten kodierten ersten symmetrischen Schlüssel umfasst;
Zugreifen (309, 317) durch die Dateneigentümer mit dem ersten Hash-Code auf den kodierten Algorithmus im verteilten Dateisystem;
Anwenden (311, 319) eines ersten inversen gemeinsamen geheimen Protokolls durch die Dateneigentümer mit einem jeweiligen ersten privaten Schlüssel, um den ersten symmetrischen Schlüssel zu erhalten; und
Dekodieren (312, 320) des kodierten Algorithmus durch die Dateneigentümer mit dem ersten symmetrischen Schlüssel, um den zu trainierenden Algorithmus zu erhalten.

7. Computerimplementiertes Verfahren nach Anspruch 6, wobei das verteilte Dateisystem ein Interplanetary File System ist.

8. Computerimplementiertes Verfahren nach einem der Ansprüche 6 bis 7, wobei der Schritt des Sendens (300) des kompilierten Mehrparteienberechnungscodes (208) an die Dateneigentümer Folgendes umfasst:
Erzeugen (402) eines zweiten symmetrischen Schlüssels für den zu trainierenden Algorithmus durch den Algorithmenanbieter (101);
Verschlüsseln (403) des kompilierten Mehrparteienberechnungscodes (208) durch den Algorithmenanbieter (101) mit dem zweiten symmetrischen Schlüssel;
Speichern (404) des verschlüsselten kompilierten Mehrparteienberechnungscodes durch den Algorithmenanbieter im verteilten Dateisystem;
Senden (405) eines zweiten Hash-Codes durch das verteilte Dateisystem an den Algorithmenanbieter (101), wobei der zweite Hash-Code den Speicherort des verschlüsselten kompilierten Mehrparteienberechnungscodes angibt;
Verschlüsseln (406) des zweiten symmetrischen Schlüssels durch den Algorithmenanbieter (101) mit einem jeweiligen zweiten gemeinsamen geheimen Protokoll, das jedem am Trainieren des Algorithmus teilnehmenden Dateneigentümer zugeordnet ist, wobei jedes zweite gemeinsame geheime Protokoll dem öffentlichen Schlüssel des entsprechenden Dateneigentümers zugeordnet ist;
Senden (407, 415) des zweiten Hash-Codes und der verschlüsselten zweiten symmetrischen Schlüssel durch den Algorithmenanbieter (101) an den Trainingsverwaltungsanbieter (160);
Senden eines zweiten Zugriffsereignisses (408, 416) durch den Trainingsverwaltungsanbieter (160) an jeden am Trainieren des Algorithmus teilnehmenden Dateneigentümer, wobei das zweite Zugriffsereignis den zweiten Hash-Code und den entsprechenden, dem Dateneigentümer zugeordneten verschlüsselten zweiten symmetrischen Schlüssel umfasst;
Zugreifen (409, 417) durch die Dateneigentümer mit dem zweiten Hash-Code auf den verschlüsselten kompilierten Mehrparteienberechnungscode im verteilten Dateisystem (190);
Anwenden (410, 418) eines zweiten inversen gemeinsamen geheimen Protokolls durch die Dateneigentümer mit einem jeweiligen zweiten privaten Schlüssel, um den zweiten symmetrischen Schlüssel zu erhalten; und
Dekodieren des verschlüsselten kompilierten Mehrparteienberechnungscodes durch die Dateneigentümer mit dem zweiten symmetrischen Schlüssel, um den kompilierten Mehrparteienberechnungscode (412) zu erhalten.

9. Computerimplementiertes Verfahren nach einem der vorhergehenden Ansprüche, wobei der Schritt des Trainierens (602, 604, 606, 608) des Algorithmus durch jeden Dateneigentümer mit seinem entsprechenden Datensatz Folgendes umfasst:
Senden einer Trainingsbeginnbenachrichtigung (601_2, 601_4, 601_5, 601_7) durch jeden am Training teilnehmenden Dateneigentümer an den Trainingsverwaltungsanbieter (160), wobei die Trainingsbeginnbenachrichtigung den Beginn des Trainings des Algorithmus angibt; und
Senden einer Trainingsabschlussbenachrichtigung (603, 605, 607, 609) durch jeden am Training teilnehmenden Dateneigentümer an den Trainingsverwaltungsanbieter (160), wobei die Trainingsabschlussbenachrichtigung den Abschluss des Trainings des Algorithmus angibt.

10. Computerimplementiertes Verfahren nach einem der vorhergehenden Ansprüche, wobei die Ausführungsmerkmale des Trainings aus einer Gruppe ausgewählt sind, die Folgendes umfasst: eine Art des Trainings, eine Art von Daten aus den Datensätzen, eine Mindestdatenmenge aus jedem Datensatz und eine beliebige Kombination davon.

11. Computerimplementiertes Verfahren nach einem der vorhergehenden Ansprüche, wobei die durch das Training zu erfüllenden Mindestanforderungen aus einer Gruppe ausgewählt sind, die Folgendes umfasst: eine Mindestanzahl am Training teilnehmender Dateneigentümer, eine bestimmte Liste von Dateneigentümern, deren Teilnahme am Training erforderlich ist, eine maximale Wartezeit, um die Dateneigentümer für die Teilnahme am Training zu erreichen, und eine beliebige Kombination davon.

12. Computerimplementiertes Verfahren nach einem der vorhergehenden Ansprüche, wobei der zu trainierende Algorithmus für mindestens eine der folgenden Aufgaben konfiguriert ist:
Bestimmen, ob eine potenzielle Anomalie im Betrieb einer Vorrichtung oder eines Systems oder im Verhalten eines Prozesses vorliegt; oder Bestimmen einer Konfiguration einer Vorrichtung oder eines Systems, die dazu bestimmt ist, deren bzw. dessen Betrieb zu verbessern und/oder eine potenzielle Anomalie davon zu beheben;
Bestimmen, ob eine potenzielle Anomalie oder Erkrankung in einem menschlichen oder tierischen Körperteil vorliegt.

13. Computerimplementiertes Verfahren zum Bereitstellen eines Dienstes auf Grundlage eines optimierten Modells, wobei das Verfahren Folgendes umfasst:
Erzeugen des optimierten Modells durch Durchführen eines Verfahrens nach einem der vorhergehenden Ansprüche;
Umkodieren (802) des optimierten Modells durch den Algorithmenanbieter (101) in einer homomorphen Ebene, um einen umkodierten Algorithmus (803) zu erhalten;
Senden (805) einer Dienstanfrage durch einen Benutzerclient (180), wobei die Dienstanfrage den jeweiligen angeforderten Dienst angibt;
Senden (82) von Benutzerclientdaten, die mit einem homomorphen öffentlichen Schlüssel für Benutzerdaten homomorph verschlüsselt sind, durch den Benutzerclient (180) an den Algorithmenanbieter (101);
Anwenden (840) der homomorph verschlüsselten Benutzerclientdaten durch den Algorithmenanbieter auf das homomorph umkodierte optimierte Modell;
Senden (841) der homomorph verschlüsselten Ergebnisse der Anwendung der homomorph verschlüsselten Benutzerclientdaten auf das homomorph umkodierte optimierte Modell durch den Algorithmenanbieter an den Benutzerclient;
Entschlüsseln (842) der homomorph verschlüsselten Ergebnisse durch den Benutzerclient mit seinem homomorphen geheimen Schlüssel.

14. Computerimplementiertes Verfahren nach Anspruch 13, ferner umfassend, vor dem Senden (805) einer Dienstanfrage, die den jeweiligen angeforderten Dienst angibt, durch einen Benutzerclient (180): Registrieren (804) des umkodierten Algorithmus (803) zusammen mit seinen relevanten funktionalen Merkmalen als einen vom Algorithmenanbieter (101) angebotenen Algorithmus.

15. Computerimplementiertes Verfahren nach Anspruch 13 oder 14, wobei der Dienst Folgendes umfasst:
entweder
Lösen eines Problems, das eine Klassifizierung von Benutzerclientdaten oder eine Vorhersage auf Grundlage von Benutzerclientdaten erfordert, wobei das Problem entweder eine Konfiguration oder einen Betrieb einer Vorrichtung oder eines Systems oder ein Verhalten eines Prozesses definiert; und
Bestimmen mindestens eines der folgenden Elemente auf Grundlage der Lösung des Problems:
ob eine potenzielle Anomalie im Betrieb der Vorrichtung oder des Systems oder im Verhalten eines Prozesses vorliegt; und
einer Konfiguration der Vorrichtung oder des Systems, die dazu bestimmt ist, deren bzw. dessen Betrieb zu verbessern und/oder die potenzielle Anomalie davon zu beheben, oder einer Konfiguration einer beliebigen Vorrichtung oder eines beliebigen Systems in dem Prozess, die dazu bestimmt ist, dessen Verhalten zu verbessern und/oder die potenzielle Anomalie davon zu beheben;
oder
Lösen eines Problems, das eine Klassifizierung von Benutzerclientdaten oder eine Vorhersage auf Grundlage von Benutzerclientdaten erfordert, wobei das Problem ein Verhalten eines menschlichen oder tierischen Körperteils definiert; und
Bestimmen auf Grundlage der Lösung des Problems, ob eine potenzielle Anomalie im Verhalten des menschlichen oder tierischen Körperteils vorliegt.

## Revendications

1. Méthode mise en œuvre par ordinateur pour entrainer des algorithmes, la méthode étant mise en œuvre dans une pluralité de dispositifs de traitement et comprenant les étapes suivantes :
fournir au moins un propriétaire de données (102-207) ayant des ensembles de données, au moins un fournisseur d'algorithmes (101) ayant des algorithmes à entraîner et un réseau de chaînes de blocs (150) où est déployé un fournisseur de gestion d'entraînement (160), dans laquelle le fournisseur de gestion d'entraînement (160) est un contrat intelligent qui s'exécute automatiquement lorsque l'on interagit avec celui-ci, et dans laquelle chacun des éléments suivants : l'au moins un propriétaire de données (102-207), l'au moins un fournisseur d'algorithmes (101) et le réseau de chaînes de blocs (150), comporte un ou plusieurs dispositifs de traitement ;
envoyer par l'au moins un fournisseur d'algorithmes (101) une demande d'entraînement (201) au fournisseur de gestion d'entraînement (160), la demande d'entraînement (201) comportant un manifeste d'entraînement qui détermine des caractéristiques d'exécution d'un entraînement de l'algorithme à entraîner et des exigences minimales à remplir par l'entraînement ;
envoyer (202_2 - 202_7) par le fournisseur de gestion d'entraînement (160) le manifeste d'entraînement à l'au moins un propriétaire de données (102-207) ;
envoyer (203_2, 203_4, 203_5, 203_7) une acceptation au fournisseur de gestion d'entraînement (160) par chaque propriétaire de données (102, 104, 105, 107) souhaitant participer à l'entraînement de l'algorithme, l'acceptation comportant un manifeste d'acceptation comprenant des moyens garantissant l'identité du propriétaire de données participant ;
une fois les exigences minimales remplies, envoyer (204) les manifestes d'acceptation au fournisseur d'algorithmes (101) par le fournisseur de gestion d'entraînement (160) ;
générer par le fournisseur d'algorithmes (101) un code de calcul multi-partie compilé (208) sur la base des manifestes d'acceptation reçus ;
envoyer (300) par le fournisseur d'algorithmes (101) l'algorithme à entraîner et le code de calcul multi-partie compilé (208) à l'au moins un propriétaire de données (102, 104, 105, 107) participant à l'entraînement de l'algorithme ;
entrainer (602, 604, 606, 608) par chaque propriétaire de données (102, 104, 105, 107) participant l'algorithme reçu avec ses ensembles de données correspondants créant un modèle local ;
exécuter (701_1, 701_2, 701_7, 705_1, 705_4, 705_5) par les propriétaires de données (102, 104, 105, 107) participants et le fournisseur d'algorithmes (101) le code de calcul multi-partie compilé générant un réseau multi-partie poste à poste (200) entre eux ; et
au moyen du réseau multi-partie poste à poste (200), générer un modèle (711) sur la base des modèles locaux et de l'algorithme à entraîner.

2. Méthode mise en œuvre par ordinateur selon la revendication 1, dans laquelle, lorsque l'algorithme à entraîner a été entraîné précédemment, l'étape de génération du modèle (711) comprend le fait d'optimiser le modèle par agrégation des modèles locaux et de l'algorithme à entraîner.

3. Méthode mise en œuvre par ordinateur selon l'une quelconque des revendications précédentes, dans laquelle le manifeste d'acceptation comprend une adresse IP du propriétaire de données participant, un certificat de propriétaire de données et facultativement une clé publique du propriétaire de données participant.

4. Méthode mise en œuvre par ordinateur selon l'une quelconque des revendications précédentes, dans laquelle le manifeste d'acceptation comprend une quantité de données à utiliser pour entraîner l'algorithme.

5. Méthode mise en œuvre par ordinateur selon l'une quelconque des revendications précédentes, comprenant, avant l'envoi de la demande d'entraînement (201) par le fournisseur d'algorithmes (101), le fait d'envoyer une demande d'abonnement (170_1 - 170_7) au fournisseur de gestion d'entraînement (160) par les propriétaires de données (102-107) et le fournisseur d'algorithmes (101).

6. Méthode mise en œuvre par ordinateur selon l'une quelconque des revendications précédentes, dans laquelle l'étape d'envoi (300) de l'algorithme aux propriétaires de données comprend les étapes suivantes :
générer (302) par le fournisseur d'algorithmes (101) une première clé symétrique pour l'algorithme à entraîner ;
chiffrer (303) l'algorithme par le fournisseur d'algorithmes (101) avec la première clé symétrique ;
stocker (304) par le fournisseur d'algorithmes (101) l'algorithme codé dans un système de fichiers distribué déployé dans un réseau de stockage poste-à-poste (190) ;
envoyer (305) au fournisseur d'algorithmes (101) par le système de fichiers distribué un premier code de hachage indiquant l'emplacement de l'algorithme codé ;
coder (306) par le fournisseur d'algorithmes (101) la première clé symétrique avec un protocole de secret partagé, dans laquelle la clé symétrique codée pour chaque propriétaire de données est associée à une clé publique du propriétaire de données respectif ;
envoyer au fournisseur de gestion d'entraînement (160) par le fournisseur d'algorithmes (101) le premier code de hachage et la clé symétrique codée correspondante pour chaque propriétaire de données ;
envoyer par le fournisseur de gestion d'entraînement (160) un premier événement d'accès (308, 316) à chaque propriétaire de données participant à l'entraînement de l'algorithme, le premier événement d'accès (308, 316) comprenant le premier code de hachage et la première clé symétrique codée correspondante associée au propriétaire de données ;
accéder (309, 317) par les propriétaires de données à l'algorithme codé dans le système de fichiers distribué avec le premier code de hachage ;
appliquer (311, 319) par les propriétaires de données un premier protocole de secret partagé inverse avec une première clé privée respective afin d'obtenir la première clé symétrique ; et
décoder (312, 320) par les propriétaires de données l'algorithme codé avec la première clé symétrique afin d'obtenir l'algorithme à entraîner.

7. Méthode mise en œuvre par ordinateur selon la revendication 6, dans laquelle le système de fichiers distribué est un système de fichiers interplanétaire.

8. Méthode mise en œuvre par ordinateur selon l'une quelconque des revendications 6 et 7, dans laquelle l'étape d'envoi (300) du code de calcul multi-partie compilé (208) aux propriétaires de données comprend ce qui suit :
générer (402) par le fournisseur d'algorithmes (101) une deuxième clé symétrique pour l'algorithme à entraîner ;
chiffrer (403) par le fournisseur d'algorithmes (101) le code de calcul multi-partie compilé (208) avec la deuxième clé symétrique ;
stocker (404) par le fournisseur d'algorithmes le code de calcul multi-partie compilé chiffré dans le système de fichiers distribué ;
envoyer (405) au fournisseur d'algorithmes (101) par le système de fichiers distribué un deuxième code de hachage indiquant l'emplacement du code de calcul multi-partie compilé chiffré ;
chiffrer (406) par le fournisseur d'algorithmes (101) la deuxième clé symétrique avec un deuxième protocole de secret partagé respectif associé à chaque propriétaire de données participant à l'entraînement de l'algorithme, chaque deuxième protocole de secret partagé étant associé à la clé publique du propriétaire de données correspondant ;
envoyer (407, 415) au fournisseur de gestion d'entraînement (160) par le fournisseur d'algorithmes (101) le deuxième code de hachage et les deuxièmes clés symétriques chiffrées ;
envoyer par le fournisseur de gestion d'entraînement (160) un deuxième événement d'accès (408, 416) à chaque propriétaire de données participant à l'entraînement de l'algorithme, le deuxième événement d'accès comprenant le deuxième code de hachage et la deuxième clé symétrique chiffrée correspondante associée au propriétaire de données ;
accéder (409, 417) par les propriétaires de données au code de calcul multi-partie compilé chiffré dans le système de fichiers distribué (190) avec le deuxième code de hachage ;
appliquer (410, 418) par les propriétaires de données un deuxième protocole de secret partagé inverse avec une deuxième clé privée respective afin d'obtenir la deuxième clé symétrique ; et
décoder par les propriétaires de données le code de calcul multi-partie compilé chiffré avec la deuxième clé symétrique afin d'obtenir le code de calcul multi-partie compilé (412).

9. Méthode mise en œuvre par ordinateur selon l'une quelconque des revendications précédentes, dans laquelle l'étape d'entrainement (602, 604, 606, 608) par chaque propriétaire de données de l'algorithme avec son ensemble de données correspondant, comprend ce qui suit :
envoyer au fournisseur de gestion d'entraînement (160) par chaque propriétaire de données participant à l'entraînement une notification de début d'entraînement (601_2, 601_4, 601_5, 601_7), la notification de début d'entraînement indiquant le commencement de l'entraînement de l'algorithme ; et
envoyer au fournisseur de gestion d'entraînement (160) par chaque propriétaire de données participant à l'entraînement une notification de fin d'entraînement (603, 605, 607, 609), la notification de fin d'entraînement indiquant l'achèvement de l'entraînement de l'algorithme.

10. Méthode mise en œuvre par ordinateur selon l'une quelconque des revendications précédentes, dans laquelle les caractéristiques d'exécution de l'entraînement sont choisies dans un groupe comprenant : un type d'entraînement, un type de données provenant des ensembles de données, une quantité minimale de données provenant de chaque ensemble de données et toute combinaison de ceux-ci.

11. Méthode mise en œuvre par ordinateur selon l'une quelconque des revendications précédentes, dans laquelle les exigences minimales à remplir par l'entraînement sont choisies dans un groupe comprenant : un nombre minimal de propriétaires de données participant à l'entraînement, une liste particulière de propriétaires de données tenus de participer à l'entraînement, un temps d'attente maximal pour chacun des propriétaires de données pour participer à l'entraînement et toute combinaison de ceux-ci.

12. Méthode mise en œuvre par ordinateur selon l'une quelconque des revendications précédentes, dans laquelle l'algorithme à entraîner est configuré pour effectuer au moins l'une des opérations suivantes :
déterminer s'il existe une anomalie potentielle dans le fonctionnement d'un appareil ou d'un système ou dans le comportement d'un procédé ; ou déterminer une configuration d'un appareil ou d'un système destinée à en améliorer le fonctionnement et/ou à résoudre une anomalie potentielle de celui-ci ;
déterminer s'il existe une anomalie ou une maladie potentielle dans une partie du corps d'un être humain ou d'un animal.

13. Méthode mise en œuvre par ordinateur pour fournir un service basé sur un modèle optimisé, la méthode comprenant les étapes suivantes :
générer le modèle optimisé en réalisant une méthode selon l'une quelconque des revendications précédentes ;
recoder (802) par le fournisseur d'algorithmes (101) le modèle optimisé dans un plan homomorphe afin d'obtenir un algorithme recodé (803) ;
envoyer (805) par un client utilisateur (180) une demande de service indiquant le service particulier demandé ;
envoyer (82) au fournisseur d'algorithmes (101) par le client utilisateur (180) des données de client utilisateur chiffrées de manière homomorphe avec une clé publique homomorphe de données utilisateur ;
appliquer (840) par le fournisseur d'algorithmes les données de client utilisateur chiffrées de manière homomorphe au modèle optimisé recodé de manière homomorphe ;
envoyer (841) au client utilisateur par le fournisseur d'algorithmes les résultats chiffrés de manière homomorphe de l'application des données de client utilisateur chiffrées de manière homomorphe au modèle optimisé recodé de manière homomorphe ;
déchiffrer (842) par le client utilisateur les résultats chiffrés de manière homomorphe avec sa clé secrète homomorphe.

14. Méthode mise en œuvre par ordinateur selon la revendication 13, comprenant en outre, avant l'envoi (805) par un client utilisateur (180) d'une demande de service indiquant le service particulier demandé : le fait d'enregistrer (804) l'algorithme recodé (803) ainsi que ses caractéristiques fonctionnelles d'intérêt en tant qu'algorithme proposé par le fournisseur d'algorithmes (101).

15. Méthode mise en œuvre par ordinateur selon l'une des revendications 13 ou 14, dans laquelle le service comprend :
soit ce qui suit :
résoudre un problème nécessitant la classification de données de client utilisateur ou d'une prédiction basée sur des données de client utilisateur, le problème définissant soit une configuration ou un fonctionnement d'un appareil ou d'un système, soit un comportement d'un procédé ; et
sur la base de la solution au problème :
déterminer s'il existe une anomalie potentielle dans le fonctionnement de l'appareil ou du système, ou dans le comportement d'un procédé ; et/ou
déterminer une configuration de l'appareil ou du système destinée à en améliorer le fonctionnement et/ou à résoudre une anomalie potentielle de celui-ci, ou une configuration de tout appareil ou système dans le procédé destinée à en améliorer le comportement et/ou à résoudre une anomalie potentielle de celui-ci ;
soit ce qui suit :
résoudre un problème nécessitant la classification de données de client utilisateur ou d'une prédiction basée sur des données de client utilisateur, le problème définissant un comportement d'une partie du corps d'un être humain ou d'un animal ; et
sur la base de la solution au problème, déterminer s'il existe une anomalie potentielle dans le comportement de la partie du corps de l'être humain ou de l'animal.
